(19) Europäisches Patentamt / European Patent Office / Office européen des brevets

(11) **EP 4 726 716 A1**

(12) **EUROPEAN PATENT APPLICATION**
published in accordance with Art. 153(4) EPC


(43) Date of publication:
**15.04.2026 Bulletin 2026/16**

(21) Application number: **24864304.1**

(22) Date of filing: **31.07.2024**

(51) International Patent Classification (IPC):
***G10L 19/16*** *(2013.01)* ***G10L 25/06*** *(2013.01)*

(52) Cooperative Patent Classification (CPC):
**G10L 25/30; G06F 40/284; G06F 40/30; G06N 3/04; G06N 3/044; G06N 3/045; G06N 3/0455; G06N 3/08; G06N 3/084; G06N 3/088; G06N 3/096; G10L 15/063; G10L 15/1815;** G10L 15/02

(86) International application number:
**PCT/CN2024/108690**

(87) International publication number:
**WO 2025/055581 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023 CN 202311205529**



(71) Applicant: **Tencent Technology (Shenzhen) Company Limited**
**Shenzhen, Guangdong 518057 (CN)**

(72) Inventor: **WANG, Jun**
**Shenzhen, Guangdong 518057 (CN)**

(74) Representative: **EP&C**
**P.O. Box 3241**
**2280 GE Rijswijk (NL)**


(54) **SPEECH ENCODER TRAINING METHOD AND APPARATUS, AND DEVICE, MEDIUM AND PROGRAM PRODUCT**


(57) The present application relates to the field of artificial intelligence. Disclosed are a speech encoder training method and apparatus, and a device, a medium and a program product. The method comprises: performing mask processing on a first sub-feature representation at a first feature position in a first text feature representation, so as to obtain a first mask feature representation; on the basis of a first speech feature representation, performing feature prediction on the first feature position, which has been subjected to mask processing, in the first mask feature representation, so as to obtain a first predicted feature representation; and on the basis of the difference between the first prediction representation and the first sub-frame representation, training a first speech encoder, so as to obtain a second speech encoder. A first speech encoder is trained by means of combining data in a speech mode with data in a text mode, and information included in the data in the text mode is used, such that the first speech encoder can learn relatively high-level semantic representations of speech, thereby improving the prediction accuracy of representations, which are obtained by means of encoding performed by the first speech encoder, on downstream tasks at relatively high semantic levels.


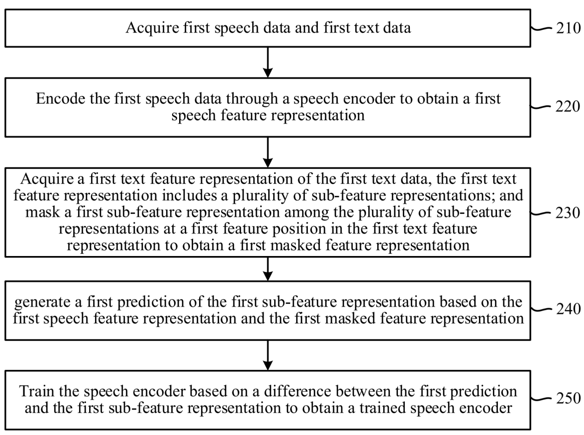


FIG. 2

EP 4 726 716 A1

## Description

### FIELD OF THE TECHNOLOGY

Embodiments of this application relate to the field of artificial intelligence (AI), and in particular, to a speech encoder training method and apparatus, a device, a medium, and a program product.

### BACKGROUND OF THE DISCLOSURE

The speech encoder is configured to encode speech data to obtain feature representations of context information that represents the speech data. That is, the speech encoder may be used as a feature extraction layer of a speech processing model. Usually, before the speech processing model is trained to perform downstream tasks such as speech recognition and speech synthesis, the speech encoder may be pre-trained in a sample data set so that the speech encoder learns data features in the sample data set in advance, thereby improving the effect of training the speech processing model.

In the related art, representation learning is performed on the speech data through a masked pre-training method. For example, inputted speech data is masked, and masked content is predicted to train the speech encoder to learn related speech feature representations from the speech data.

However, in the related art, the representation learned from the speech data usually has a relatively low semantic level, and the prediction accuracy of the representation on downstream tasks requiring a relatively high semantic level is relatively low.

### SUMMARY

Embodiments of this application provide a speech encoder training method and apparatus, a device, a medium, and a program product, which can improve the level of a representation learned by the speech encoder, so that the prediction accuracy of the representation on a downstream task of a relatively high semantic level is relatively high. The technical solutions are as follows.

According to one aspect, a method for training a speech encoder is provided, including the following operations:

acquiring first speech data and first text data, wherein a semantic similarity degree between the first speech data and the first text data is greater than or equal to a preset similarity threshold;

encoding the first speech data through a speech encoder to obtain a first speech feature representation;

acquiring a first text feature representation of the first text data, the first text feature representation comprising a plurality of sub-feature representations; and masking a first sub-feature representation among the plurality of sub-feature representations at a first feature position in the first text feature representation to obtain a first masked feature representation;

generating a first prediction of the first sub-feature representation based on the first speech feature representation and the first masked feature representation; and

training the speech encoder based on a difference between the first prediction and the first sub-feature representation to obtain a trained speech encoder, the trained speech encoder being configured to encode speech data.

According to another aspect, an apparatus for training a speech encoder is provided, including:

an acquisition module configured to acquire first speech data and first text data, wherein a semantic similarity degree between the first speech data and the first text data is greater than or equal to a preset similarity threshold;

an encoding module configured to encode the first speech data through a speech encoder to obtain a first speech feature representation;

a masking module configured to acquire a first text feature representation of the first text data, wherein the first text feature representation comprising a plurality of sub-feature representations; and mask a first sub-feature representation among the plurality of sub-feature representations at a first feature position in the first text feature representation to obtain a first masked feature representation;

a prediction module configured to generate a first prediction of the first sub-feature representation based on the first speech feature representation and the first masked feature representation; and

a training module configured to train the speech encoder based on a difference between the first prediction and the first sub-feature representation to obtain a trained speech encoder, the trained speech encoder being configured to encode speech data.

According to another aspect, a computer device is provided, including a processor and a memory, the memory having at least one instruction, at least one program, a code set, or an instruction set stored therein, and the at least one instruction, the at least one program, the code set, or the instruction set being loaded and executed by the processor to implement the speech encoder training method according to any one of the foregoing embodiments.

According to another aspect, a computer-readable storage medium is provided, having at least one instruction, at least one program, a code set, or an instruction set stored therein, the at least one instruction, the at least one program, the code set, or the instruction set being loaded and executed by a processor to implement the speech encoder training method according to any one of the foregoing embodiments.

According to another aspect, a computer program product or a computer program is provided, including a computer instruction, the computer instruction being stored in a computer-readable storage medium. A processor of a computer device reads the computer instruction from the computer-readable storage medium and executes the computer instruction to cause the computer device to perform the speech encoder training method according to any one of the foregoing embodiments.

The technical solutions provided in the embodiments of this application have at least the following beneficial effects.

After the first speech data and the first text data that have a semantic matching relationship are acquired, the first speech data is encoded through the first speech encoder to obtain the first speech feature representation, and the first text feature representation of the first text data is masked to obtain the first masked feature representation. Then, the masked feature representation in the first text feature representation is predicted through the first speech feature representation, and the first speech encoder is trained based on a difference between a predicted feature representation and an originally masked feature representation to obtain the second speech encoder. The first speech encoder is trained by combining data in a speech modality with data in a text modality, and information included in the data in the text modality is adopted so that the first speech encoder can learn relatively high-level semantic representations of speech, thereby improving the prediction accuracy of representations, which are obtained by encoding through the first speech encoder, on downstream tasks at relatively high semantic levels.

## BRIEF DESCRIPTION OF THE DRAWINGS

To more clearly illustrate the technical solutions in embodiments of this application, the drawings required in the descriptions of the embodiments will be briefly introduced below. It is clear that the drawings described below are only some embodiments of this application, and a person skilled in the art may obtain other drawings according to these drawings without involving any creative efforts.

FIG. 1 is a schematic diagram of an implementation environment according to an exemplary embodiment of this application.

FIG. 2 is a schematic diagram of a speech encoder training method according to an exemplary embodiment of this application.

FIG. 3 is a schematic diagram of a speech encoder training process according to an exemplary embodiment of this application.

FIG. 4 is a schematic diagram of a speech encoder training method according to another exemplary embodiment of this application.

FIG. 5 is a schematic diagram of a speech encoder training process according to another exemplary embodiment of this application.

FIG. 6 is a schematic diagram of a speech encoder training method according to yet another exemplary embodiment of this application.

FIG. 7 is a schematic diagram of a speech encoder training process according to yet another exemplary embodiment of this application.

FIG. 8 is a schematic diagram of a text encoder training method according to an exemplary embodiment of this application.

FIG. 9 is a schematic diagram of a text encoder training process according to an exemplary embodiment of this application.

FIG. 10 is a schematic diagram of a speech encoder training method according to still another exemplary embodiment of this application.

FIG. 11 is a schematic diagram of a speech encoder training process according to still another exemplary embodiment of this application.

FIG. 12 is a schematic structural diagram of an encoder according to an exemplary embodiment of this application.

FIG. 13 is a schematic structural diagram of blocks in an encoder according to an exemplary embodiment of this application.

FIG. 14 is a schematic diagram of an example of application of a speech encoder in an intelligent speech interaction product according to an exemplary embodiment of this application.

FIG. 15 is a structural block diagram of a speech encoder training apparatus according to an exemplary embodiment of this application.

FIG. 16 is a structural block diagram of a computer device according to an exemplary embodiment of this application.

DESCRIPTION OF EMBODIMENTS

To make the objectives, technical solutions, and advantages of this application clearer, implementations of this application will be further described in detail below with reference to the accompanying drawings. Apparently, the described embodiments are merely some rather than all of the embodiments of this application. All other embodiments obtained by a person skilled in the art based on the embodiments of this application without creative efforts fall within the protection scope of this application.

In this application, the terms such as "first" and "second" are intended to distinguish same items or similar items with substantially same effects and functions. The "first" and "second" do not have a dependency relationship in logic or time sequence, and the number and the execution order are not limited.

First, terms involved in the embodiments of this application are briefly introduced.

AI involves a theory, a method, a technology, and an application system that use a digital computer or a machine controlled by the digital computer to simulate, extend, and expand human intelligence, perceive an environment, acquire knowledge, and use knowledge to obtain an optimal result. In other words, AI is a comprehensive technology of computer science and attempts to understand the essence of intelligence and produce a new intelligent machine that can react in a manner similar to human intelligence. AI is to study the design principles and implementation methods of various intelligent machines to enable the machines to have the functions of perception, reasoning, and decision-making.

The AI technology is a comprehensive discipline and relates to a wide range of fields including both hardware-level technologies and software-level technologies. Basic AI technologies generally include a sensor, a dedicated AI chip, cloud computing, distributed storage, a big data processing technology, a pre-trained model technology, an operating/interaction system, electromechanical integration, and the like. A pre-trained model is alternatively referred to as a large model or a basic model, and after fine-tuning, may be widely applied to various downstream AI tasks. AI software technologies mainly include several major directions such as a computer vision technology, a speech processing technology, a natural language processing technology, and machine learning (ML)/deep learning.

The ML is a multi-field interdiscipline and relates to a plurality of disciplines such as the probability theory, statistics, approximation theory, convex analysis, and algorithm complexity theory. The ML specializes in studying how a computer simulates or implements a human learning behavior to obtain new knowledge or skills, and reorganize an existing knowledge structure, so as to keep improving its performance. The ML is the core of AI, is a basic way to make the computer intelligent, and is applied to various fields of AI. The ML and the deep learning generally include technologies such as an artificial neural network, a confidence network, reinforcement learning, transfer learning, inductive learning, and learning from demonstration.

Large language model (LLM): it is an ultra-large-scale language model with parameter sizes reaching tens or even hundreds of billions, typically requiring massive amounts of data and computing resources. Generally, the LLM has stronger generalization capabilities. Using the capability of "few-shot learning" or "zero-shot learning", it may achieve efficient performance in many natural language processing tasks, such as text classification, language translation, and question-answering systems. In addition, the LLM may further be configured for generating high-quality natural language text. The LLM may alternatively be referred to as a generative language model.

In the related art, representation learning is performed on the speech data through a masked pre-training method. For example, inputted speech data is masked, and masked content is predicted to train the speech encoder to learn related speech feature representations from the speech data. However, in the related art, the representation learned from the speech data usually has a relatively low semantic level, and the prediction accuracy of the representation on downstream tasks requiring a relatively high semantic level is relatively low.

In the embodiments of this application, a first speech encoder is trained by combining data in a speech modality with data in a text modality, and information included in the data in the text modality is adopted so that the first speech encoder can learn relatively high-level semantic representations of speech, thereby improving the prediction accuracy of representations, which are obtained by encoding through the first speech encoder, on downstream tasks at relatively high semantic levels. The speech encoder obtained through training using the speech encoder training method provided in the embodiments of this application may be applied to multiple speech processing tasks, for example, a speech recognition task, a speech synthesis task, a speech sentiment analysis task, a speech conversion task, a speech enhancement task, and a speech fingerprint recognition task. This is not limited in the embodiments of this application.

Secondly, an implementation environment involved in the embodiments of this application will be described. Illustratively, referring to FIG. 1, a server 110 is involved in the implementation environment.

In some embodiments, the server 110 is implemented as a computer device that can process large-scale data. The server 110 can read, at a high speed, data in a training database 120 for training. The training database includes first speech data and first text data, and a semantic matching relationship exists between the first speech data and the first text data. For example, if the first text data is "Hello", the first speech data is the speech of "Hello".

A method for reading the training database 120 by the server 110 is not limited in the embodiments of this application. For example, the server 110 may read a training database stored in a local file system. Alternatively, the server 110 may read a training database stored in the cloud.

In some embodiments, the server 110 stores a first speech encoder. After reading the training database, the server 110 first encodes first speech data in the training database to obtain a first speech feature representation; then acquires a first text feature representation corresponding to first text data in the training database and masks a first sub-feature representation at a first feature position in the first text feature representation to obtain a first masked feature representation; and finally, performs feature prediction on the first feature position in the first masked feature representation based on the first speech feature representation to obtain a first predicted feature representation and trains a first speech encoder based on a difference between the first predicted feature representation and the first sub-feature representation to obtain a second speech encoder. The second speech encoder obtained by training through the server 110 may be applicable to any speech processing model. The second speech encoder may be used as a speech feature extractor in the speech processing model.

The server 110 may be an independent physical server, may be a server cluster or distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), a big data and AI platform.

The cloud technology refers to a hosting technology that unifies a series of resources such as hardware, software, and networks in a wide area network or a local area network to realize data calculation, storage, processing, and sharing. The cloud technology is a general term for network technology, information technology, integration technology, management platform technology, and application technology that are applied based on a commercial model of cloud computing. It may form a resource pool and may be used on demand, which is flexible and convenient. The cloud computing technology will become an important support. The background service of a technical network system requires many computing and storage resources, for example, video websites, picture websites, and more portal websites. With the rapid development and application of the Internet industry, each item may have its own recognition mark in the future, and the recognition marks need to be transmitted to a backend system for logical processing. Data of different levels is processed separately, and all kinds of industry data require a strong system support, which can be realized only through the cloud computing. In some embodiments, the server 110 may alternatively be implemented as a node in a blockchain system.

In some embodiments, a terminal (not shown) is involved in the implementation environment shown in FIG. 1. The terminal includes, but is not limited to, a mobile terminal such as a mobile phone, a tablet computer, a portable laptop computer, an intelligent speech interaction device, an intelligent household appliance, or an in-vehicle terminal, or may be implemented as a desktop computer or the like.

In some embodiments, an application program or system having a speech processing task function is installed in the terminal. The speech processing task includes at least one of a speech recognition task, a speech synthesis task, a speech sentiment analysis task, a speech conversion task, a speech enhancement task, a speech fingerprint recognition task, and the like. This is not limited in this embodiment of this application. Illustratively, the foregoing application program includes an instant messaging application program, a news information application program, a comprehensive search engine application program, a social application program, a game application program, a shopping application program, a map navigation application program, and the like. Alternatively, the application program is implemented as a mini program that relies on a host application program, and the host application program may be implemented as any one of the foregoing programs. Illustratively, the foregoing system includes an intelligent speech interaction system, an intelligent speech assistant, an automatic speech recognition (ASR) system, an audio/video conferencing system, an in-vehicle speech interaction system, and the like. This is not limited in this embodiment of this application.

In some embodiments, after obtaining the second speech encoder through training, the server 110 trains a target speech processing model using the second speech encoder as a feature extraction network and provides, through a trained target speech processing model, a background computing service for an application program or a system that has a target speech processing function in the terminal. Alternatively, the server 110 transmits the trained target speech processing model to the terminal so that the terminal can realize the target speech processing function independently.

In this application, when training data is acquired, the training data needs to be desensitized to obtain desensitized training data as the training database. Desensitizing includes: removing personal information, perturbing numerical ranges, replacing sensitive information with character strings, deleting sensitive information, generalization, and the like. This is not limited in this embodiment of this application. In addition, the desensitized training data still maintains availability and analyzability to ensure that data analysis and modeling are not greatly affected. Meanwhile, all training data acquired in this application is acquired with consent and authorization of relevant users, and the acquisition, use, and processing of relevant user data need to comply with relevant laws, regulations, and standards.

With reference to the foregoing description and implementation environment, the speech encoder training method provided in this application is described. The method is described using an example in which the method is applied to a server. As shown in FIG. 2, the method includes the following operation 210 to operation 250.

Operation 210: Acquire first speech data and first text data.

A semantic matching relationship exists between the first speech data and the first text data.

The first speech data and the first text data are data in a training data set of a speech encoder. In some embodiments, speech corresponding to the first speech data is at least one of Chinese speech, English speech, German speech, and the like, and text corresponding to the first text data is at least one of Chinese text, English text, German text, and the like. Types (i.e., language types) of natural languages corresponding to the first speech data and the first text data are not limited in this embodiment of this application.

In some embodiments, the semantic matching relationship existing between the first speech data and the first text data refers to semantic similarity degree between speech content of the first speech data and text content of the first text data being greater than or equal to a preset similarity threshold.

Illustratively, if the text content of the first text data is "The technology belongs to the field of speech processing", the speech content of the first speech data may be "The technology belongs to the field of speech processing" read in Chinese. That is, the text content of the first text data and the speech content of the first speech data are completely the same and express the same semantics. Alternatively, if the text content of the first text data is "I like puppies", the speech content of the first speech data may be "Puppies are my favorite animals" read in Chinese. That is, the text content of the first text data and the speech content of the first speech data are not completely the same, but express similar semantics.

In some embodiments, methods for acquiring the first speech data and the first text data include at least one of the following cases.

1. After the first text data is acquired, speech data corresponding to the first text data is manually acquired as the first speech data. Alternatively, after the first speech data is acquired, text data corresponding to the first speech data is manually acquired as the first text data.

Illustratively, after the first text data is acquired, speech of the first text data that is read aloud by a person and recorded through a microphone is used as the first speech data. Alternatively, after the first speech data is acquired, text corresponding to the first speech data is manually inputted as the first text data.

2. After the first text data is acquired, the first text data is inputted to a text-to-speech model to obtain the first speech data. After the first speech data is acquired, the first speech data is inputted to a speech-to-text model to obtain the first text data.

Illustratively, after the first text data is acquired, the first text data is inputted to the text-to-speech model, and speech corresponding to the first text data is synthesized through a computer as the first speech data. After the first speech data is acquired, the first speech data is inputted to the speech-to-text model, and text corresponding to the speech is recognized through the speech-to-text model as the first text data.

In some embodiments, after the first speech data is obtained through the text-to-speech model, the first speech data outputted by the model is manually verified. If the verification succeeds, it is determined that a semantic matching relationship exists between the first speech data outputted by the model and the first text data. If the verification fails, it is determined that no semantic matching relationship exists between the first speech data outputted by the model and the first text data, and the first speech data outputted by the model is manually corrected.

Alternatively, the first speech data obtained through the text-to-speech model is inputted to a scoring model to calculate semantic similarity degree between the first speech data outputted by the model and the first text data. If the semantic similarity degree is less than a preset similarity threshold, the first speech data outputted by the model is manually corrected.

In some embodiments, after the first text data is obtained through the speech-to-text model, the first text data outputted by the model is manually verified. If the verification succeeds, it is determined that a semantic matching relationship exists between the first text data outputted by the model and the first speech data. If the verification fails, it is determined that no semantic matching relationship exists between the first text data outputted by the model and the first speech data, and the first text data output by the model is manually corrected.

Alternatively, the first text data obtained through the speech-to-text model is inputted to the scoring model to calculate the semantic similarity degree between the first text data outputted by the model and the first speech data. If the semantic similarity degree is less than the preset similarity threshold, the first text data outputted by the model is manually corrected.

3. A plurality of pieces of candidate text data and a plurality of pieces of candidate speech data are acquired and inputted to the scoring model. If semantic similarity degree between target candidate text data in the plurality of pieces of candidate text data and target candidate speech data in the plurality of pieces of candidate speech data is greater than or equal to the preset similarity threshold, the target candidate text data is used as the first text data, and the target candidate speech data is used as the first speech data.

Illustratively, after the plurality of pieces of candidate text data and the plurality of pieces of candidate speech data are inputted to the scoring model, semantic similarity degree between each piece of candidate text data and each piece of candidate speech data is calculated through the scoring model, and a data pair (i.e., candidate text data-candidate speech data) whose semantic similarity degree is greater than or equal to the preset similarity threshold is outputted as the first text data and the first speech data.

In some embodiments, if there are a plurality of pieces of candidate text data having semantic similarity with a single piece of target candidate speech data being greater than or equal to the preset similarity threshold, candidate text data having the highest semantic similarity among the plurality of pieces of candidate text data is used as text data having the semantic matching relationship with the target candidate speech data. Alternatively, if there are a plurality of pieces of candidate speech data having semantic similarity with a single piece of target candidate text data being greater than or equal to the preset similarity threshold, candidate speech data having the highest semantic similarity among the plurality of pieces of candidate speech data is used as speech data having the semantic matching relationship with the target candidate text data.

The foregoing examples of the methods for acquiring the first speech data and the first text data are merely exemplary descriptions. This is not limited in this embodiment of this application.

Operation 220: Encode the first speech data using a speech encoder to obtain a first speech feature representation.

In some embodiments, the speech encoder (hereinafter referred to as a first speech encoder) refers to a speech context encoder. That is, the first speech feature representation is configured for representing context information of the first speech data. i.e, a vector representing context information of the first speech data. In some embodiments, the context information may include surrounding information (e.g., dialogue history, speaker identity, environment context) that helps understand the meaning and intent of the speech more accurately. The context information is encoded into a vector (a numerical representation).

Illustratively, the first speech encoder is implemented as a context encoder and is configured to encode the first speech data into a speech context vector. The context encoder includes at least one of a recurrent neural network (RNN)-based encoder structure, a convolutional neural network (CNN)-based encoder structure, an attention mechanism-based encoder structure, a transformer-based encoder structure, a conformer-based encoder structure, and the like. This is not limited in this embodiment of this application.

The transformer-based encoder structure is used as an example for description. Different data positions of the first speech data are modeled through the multi-layer self-attention and feedforward neural network in the transformer structure to generate a context vector representation, i.e., the first speech feature representation.

In some embodiments, before the first speech data is inputted to the first speech encoder, the first speech data further needs to be encoded into a speech sequence form through a first speech pre-encoder.

In some embodiments, the first speech data is inputted to the first speech pre-encoder for pre-encoding to obtain a first speech sequence corresponding to the first speech data. The first speech sequence is inputted to the first speech encoder for encoding to obtain the first speech feature representation.

Illustratively, speech pre-encoding is configured for processing the first speech data into a signal that is conveniently recognized and processed by a computer device. The first speech sequence may be implemented as an original speech waveform signal. The original speech waveform signal refers to a signal whose original amplitude changes with time.

Alternatively, the first speech sequence is implemented as a sequence obtained by further processing the original speech waveform signal, for example, a speech mel-spectrogram feature. The speech mel-spectrogram feature is a time-frequency matrix and is configured for indicating energy distribution of the original speech waveform signal in different frequency bands.

Operation 230: Acquire a first text feature representation of the first text data, the first text feature representation includes a plurality of sub-feature representations; and mask a first sub-feature representation among the plurality of sub-feature representations at a first feature position in the first text feature representation to obtain a first masked feature representation.

In some embodiments, the first text feature representation is configured for representing context information of the first text data, i.e., a vector that represents semantic and context information of the first text data.

In some embodiments, the first text data is encoded through a text encoder (hereinafter referred to as a first text encoder) to obtain a first text feature representation.

Illustratively, the first text encoder is implemented as a context encoder and is configured to encode the first text data into a text context vector. Encoder structures of the first text encoder and the first speech encoder may be the same structure or different structures. This is not limited in this embodiment of this application.

In some embodiments, before the first text data is inputted to the first text encoder, the first text data further needs to be encoded into a text sequence form through a first text pre-encoder.

In some embodiments, the first text data is pre-encoded through the first text pre-encoder to obtain a first text sequence corresponding to the first text data. The first text sequence is encoded through the first text encoder to obtain the first text feature representation.

Illustratively, text pre-encoding is configured for processing the first text data into a sequence that is conveniently recognized and processed by the computer device. The first text pre-encoder may be understood as an embedding layer structure of a model. The embedding layer is configured for converting the first text data into a dense vector representation.

After the first text feature representation is obtained, the first sub-feature representation at the first feature position in the first text feature representation is masked to obtain the first masked feature representation. Masking refers to masking, deleting, or corrupting the first sub-feature representation in the first text feature representation so that the computer device cannot completely learn information expressed by the first sub-feature representation. For example, when the first sub-feature representation is deleted, the computer device cannot learn complete information expressed by the first sub-feature representation. When the first sub-feature representation is corrupted (or noise-added), the computer device can only learn partial information expressed by the first sub-feature representation, but cannot learn the complete information expressed by the first sub-feature representation.

The first masked feature representation obtained by masking the first text feature representation is a masked first text feature representation. For example, if the masking is deleting the first sub-feature representation, the first masked feature representation refers to a first text feature representation without the first sub-feature representation. If the masking is adding noise to the first sub-feature representation, the first masked feature representation refers to a first text feature representation obtained after adding noise to the first sub-feature representation.

In some embodiments, the masking may be random, that is, one feature position in the first text feature representation is randomly selected for masking. Alternatively, the masking may be indicated in advance, that is, a masking instruction is inputted in advance. The masking instruction contains a feature position (for example, the beginning of a sentence) or a feature representation (for example, some specified words or some words with specified parts of speech) that needs to be masked. The first text feature representation is masked according to the masking instruction.

In some embodiments, the first text feature representation may be masked a plurality of times to obtain a plurality of first masked feature representations.

In some embodiments, after the first text feature representation is obtained, the first text feature representation is masked a plurality of times to obtain a plurality of first masked feature representations. Different first masked feature representations correspond to different first feature positions, and first sub-feature representations at different first feature positions are different.

Operation 240: generate a first prediction of the first sub-feature representation based on the first speech feature representation and the first masked feature representation.

Illustratively, feature prediction is performed on the first feature position in the first masked feature representation according to speech context information contained in the first speech feature representation to generate the first prediction (first predicted feature representation). The first predicted feature representation refers to a text feature representation at the first feature position obtained through prediction according to features of the speech.

In some embodiments, feature prediction is performed on the first feature position in the first masked feature representation through a first feature predictor.

In some embodiments, the first speech feature representation and the first masked feature representation are inputted to the first feature predictor to obtain the first predicted feature representation.

The first feature predictor may be implemented as at least one of a transformer-based structure, a conformer-based structure, a convolutional layer-based structure, and the like. This is not limited in this embodiment of this application.

In some embodiments, when the first text feature representation is masked, a mask position mark (positional embedding) corresponding to the first feature position is provided. During feature prediction, feature prediction needs to be performed on the first feature position in the first masked feature representation through the mask position mark and the first speech feature representation.

In some embodiments, a first mask position mark (first positional embedding) is acquired. Feature prediction is performed on the first feature position in the first masked feature representation based on the first speech feature representation and the first mask position mark to obtain the first predicted feature representation.

The first mask position mark is configured for marking the first feature position.

In some embodiments, the first mask position mark includes at least one of an absolute position mark and a relative position mark. The absolute position mark refers to an accurate position corresponding to the first feature position, for example, a feature representation corresponding to a first word. The relative position mark refers to a relative position corresponding to the first feature position. The relative position describes a specific position by comparing with other feature positions, for example, a feature representation corresponding to a word spaced from the first word by two words.

In some embodiments, the first speech feature representation, the first masked feature representation, and the first mask position mark are inputted to the first feature predictor to obtain the first predicted feature representation.

In some embodiments, if the first text feature representation is masked a plurality of times, a first mask position mark is generated after each masking. According to a plurality of first mask position marks and the first speech feature representation, feature prediction is performed on a plurality of first feature positions in the first masked feature representation to obtain a plurality of first predicted feature representations.

In some embodiments, the first speech feature representation, the plurality of first masked feature representations, and the plurality of first mask position marks are inputted to the first feature predictor to obtain a plurality of first predicted feature representations.

One first mask position mark may contain a plurality of sub-marks. Illustratively, for the text "Shang Shan Da Lao Hu", it is assumed that masking is performed twice. Then, "Shang" and "Hu" are masked for the first time, and the obtained first mask position mark includes mask position marks corresponding to "Shang" and "Hu", respectively. "Shang" and "Shan" are masked for the second time, and the obtained first mask position mark includes mask position marks corresponding to "Shang" and "Shan", respectively.

When the first feature predictor performs feature prediction, a non-autoregressive method is involved. That is, the predicted feature is not generative, but is predicted in a latent representation space. The latent representation space refers to a high-dimensional space configured for representing input data in ML, and each dimension of data in the latent representation space represents one feature or attribute. In this embodiment of this application, the outputted first predicted feature representation, the first text feature representation, and the like all belong to features of the latent representation space.

Operation 250: Train the speech encoder based on a difference between the first prediction and the first sub-feature representation to obtain a trained speech encoder.

The trained speech encoder (second speech encoder) is configured to encode the speech data.

Illustratively, the first sub-feature representation is a supervision signal generated by the first text data. The first predicted feature representation is prediction data generated based on the first speech data. The first speech encoder is trained by reducing the difference between the first predicted feature representation and the first sub-feature representation so that the first speech encoder can learn to extract a feature representation of a multi-semantic level of the speech data. The multi-semantic level includes at least one of a speech semantic level and a text semantic level.

In some embodiments, a first loss is determined based on the difference between the first predicted feature representation and the first sub-feature representation. The first speech encoder is trained based on the first loss to obtain the second speech encoder.

In some embodiments, a loss function for calculating the first loss may be implemented as at least one of an L1 loss function, an L2 loss function, a Huber loss function (which is a loss function between the L1 loss function and the L2 loss function and may balance impact of the L1 loss function and the L2 loss function), a cross-entropy loss function, and the like. This is not limited in this embodiment of this application.

Illustratively, when a loss value of the first loss is less than or equal to a preset loss value, the training of the first speech encoder is stopped. Alternatively, when the number of times of training the first speech encoder reaches a preset number of times, the training of the first speech encoder is stopped. The training of the first speech encoder is stopped, and a speech encoder obtained when the training is stopped is the second speech encoder.

In some embodiments, if the structure participating in feature prediction further includes the foregoing first speech pre-encoder, first text pre-encoder, first text encoder, and first feature predictor, when the first speech encoder is trained, a structure that performs parameter update includes the first speech pre-encoder, the first speech encoder, and the first feature predictor, and a structure that does not perform parameter update (i.e., parameter freezing) includes the first text pre-encoder and the first text encoder.

In summary, according to the speech encoder training method provided in this embodiment of this application, after the first speech data and the first text data that have a semantic matching relationship are acquired, the first speech data is encoded through the first speech encoder to obtain the first speech feature representation, and the first text feature representation of the first text data is masked to obtain the first masked feature representation. Then, the masked feature representation in the first text feature representation is predicted through the first speech feature representation, and the first speech encoder is trained based on a difference between a predicted feature representation and an originally masked feature representation to obtain the second speech encoder. The first speech encoder is trained by combining data in a speech modality with data in a text modality, and information included in the data in the text modality is adopted so that the first speech encoder can learn relatively high-level semantic representations of speech, thereby improving the prediction accuracy of representations, which are obtained by encoding through the first speech encoder, on downstream tasks at relatively high semantic levels.

According to the method provided in this embodiment of this application, when the first predicted feature representation is predicted, feature representations of positions that need to be predicted are specified through the first mask position mark so that the predicted first predicted feature representation is more accurate, and the feature prediction efficiency is improved.

According to the method provided in this embodiment of this application, a feature outputted by the first text encoder, i.e., a text context encoder, is configured for mask prediction and used as the supervision signal to ensure that a feature configured for supervision comes from a latent representation space having rich semantics, thereby improving the effect of training the speech encoder.

Illustratively, descriptions are provided using an example in which the structure participating in feature prediction further includes the first speech pre-encoder, the first speech encoder, the first text pre-encoder, the first text encoder, and the first feature predictor.

FIG. 3 is a schematic diagram of a speech encoder training process. FIG. 3 shows a non-autoregressive multi-modality joint latent representation prediction architecture 300. In the prediction architecture 300, a speech pre-encoder 301, a speech context encoder 302 (denoted by $f_{\theta 1}$), a text pre-encoder 303, a text context encoder 304 (denoted by $f_{\bar{\theta}}$), and a predictor 305 (denoted by $g_{\Phi 1}$) are included.

A basic idea of the prediction architecture 300 is to predict missing mask information in a multi-modality common abstract representation space based on the context. Specifically, several randomly masked context blocks are given, and representations of target blocks in a text modality are predicted when there is cross-modality matching data. A target representation (i.e., the supervision signal) is calculated through a learnable encoder.

As shown in FIG. 3, after the text "Shang Shan Da Lao Hu" and the matching speech are acquired, the speech is inputted to the speech pre-encoder 301 for encoding to obtain a speech pre-encoded signal x, and the speech pre-encoded signal x is inputted to the speech context encoder 302 for encoding to obtain a speech feature representation $Z_x$. The text is inputted to the text pre-encoder 303 for encoding to obtain a text pre-encoded signal y, the text pre-encoded signal y is inputted to the text context encoder 304 for encoding to obtain a text feature representation, and then a set of masking (i.e., masking a plurality of times) is performed on the text feature representation to obtain a set of text masked feature representation $Z_y(l)$, ..., $Z_y(i)$, ..., and $Z_y(M)$ (M is an integer greater than 1, $i \leq M$ and i is a positive integer, and M represents the number of times of masking a signal text feature representation). When the text pre-encoded signal y is masked, condition variables $C_y(l)$, ..., $C_y(i)$, ..., and $C_y(M)$ are provided. $C_y(l)$, ..., $C_y(i)$, ..., and $C_y(M)$ correspond to a set of mask position embedding marks (i.e., the foregoing first mask position marks) that specify a mask position of a text feature to be predicted to the predictor 305.

The speech feature representation $Z_x$, the text masked feature representation $Z_y(1)$, ..., $Z_y(i)$, ..., and $Z_y(M)$, and the condition variables $C_y(1)$, ..., $C_y(i)$, ..., and $C_y(M)$ are inputted to the predictor 305, and the predictor 305 outputs an $i^{th}$ prediction result $Z(i) = g_{\Phi 1}(Z_x, Z_y(i), C_y(i))$. As shown in FIG. 3, since masking is performed three times, under the instruction of the three condition variables $C_y$, the predictor 305 outputs three different prediction results Z, each of which represents a predicted feature representation at one mask position.

After the prediction result Z is obtained, a loss corresponding to the prediction result Z needs to be calculated. In the embodiment shown in FIG. 3, a target Z* for calculating the loss is implemented as an output of the text context encoder 304, i.e., Z*(1), ..., Z*(i), ..., and Z*(M). Z*(i) represents a feature representation at a mask position of $i^{th}$ masking. Assuming that the mask position of the $i^{th}$ masking is a position corresponding to "Shang Shan", a feature representation (sub-feature representation) corresponding to "Shang Shan" is Z*(i).

In some embodiments, a calculation formula for calculating the loss function between Z and the target Z* is shown in the following formula 1:

$$\text{Formula 1: } \frac{1}{M}\sum_{i=1}^{M} D(z(i), z^{*}(i)) = \frac{1}{M}\sum_{i=1}^{M} ||z(i) - z^{*}(i)||_{2}^{2},$$

where M represents the number of times of masking a signal text feature representation, which is shown in FIG. 3 as 3. Formula 1 refers to calculating an L2 loss between each Z(i) and the corresponding Z*(i), and then calculating an average loss value of M losses as a loss value for the final parameter update of the model.

In some embodiments, when the average value of the M losses is calculated, a weighted averaging method may further be used. That is, different mask positions correspond to different weights. The weight may be set in advance, or may be dynamically updated in a training process.

After the loss between Z and the target Z* is obtained, parameter update is performed on the modules in the prediction architecture 300 through the loss. Parameter update modules (i.e., learning modules in FIG. 3) include the speech pre-encoder 301, the speech context encoder 302, and the predictor 305. Modules that do not perform parameter update (i.e., freezing modules in FIG. 3) include the text pre-encoder 303 and the text context encoder 304.

In the embodiment shown in FIG. 3, the target Z* is an output of the text context encoder 304 rather than the original input text or the text pre-encoded signal y, to ensure that the target Z* comes from the latent representation space having rich semantics of context information, thereby improving the effect of training various modules. In addition, in the foregoing embodiment, in the method for training the latent representation space, the speech encoder is prevented from learning unnecessary frame-level details, thereby learning more middle-high level semantic features.

In some embodiments, the first speech data may be implemented as masked speech data obtained by masking the first sub-data in unmasked speech data. Illustratively, as shown in FIG. 4, the embodiment in FIG. 2 may alternatively be implemented as operation 410 to operation 450.

Operation 410: Acquire unmasked speech data and first text data.

A semantic matching relationship exists between the unmasked speech data and the first text data.

In some embodiments, the semantic matching relationship existing between the unmasked speech data and the first text data refers to semantic similarity degree between speech content of the unmasked speech data and text content of the first text data being greater than or equal to a preset similarity threshold.

Operation 421: Mask first sub-data at a first data position in the unmasked speech data to obtain first speech data (first masked data).

In some embodiments, the unmasked speech data is pre-encoded through a first speech pre-encoder to obtain a first speech sequence corresponding to the unmasked speech data. A first sub-sequence at the first sequence position in the unmasked speech sequence is masked to obtain the first masked data. The first sequence position corresponds to the first data position, and the first sub-sequence indicates a sequence of the first sub-data.

In some embodiments, the masking may be random, that is, a sequence position in the unmasked speech sequence is randomly selected for masking. Alternatively, the masking may be indicated in advance, that is, a masking instruction is inputted in advance. The masking instruction contains a sequence position or a sequence that needs to be masked. The unmasked speech sequence is masked according to the masking instruction.

In some embodiments, the unmasked speech sequence may be masked a plurality of times to obtain a plurality of pieces of first masked data.

In some embodiments, after the unmasked speech sequence is obtained, the unmasked speech sequence is masked a plurality of times to obtain a plurality of pieces of first masked data. Different first masked data corresponds to different first sequence positions, and first sub-sequences at the different first sequence positions are different.

Operation 422: Encode the first speech data through the first speech encoder to obtain the first speech feature representation.

In some embodiments, the first speech encoder refers to a speech context encoder. That is, the first speech feature representation is configured for representing context information of the first masked data. Illustratively, the first masked data is inputted to the first speech encoder to encode the first masked data into a speech context vector.

In some embodiments, if the unmasked speech sequence is masked a plurality of times, a plurality of pieces of first masked data need to be encoded to obtain a plurality of first speech feature representations.

Operation 430: Acquire a first text feature representation of the first text data, and mask a first sub-feature representation at a first feature position in the first text feature representation to obtain a first masked feature representation.

In some embodiments, the first text feature representation is configured for representing context information of the first text data.

In some embodiments, the first text data is encoded through a first text encoder to obtain a first text feature representation. Illustratively, the first text encoder is implemented as a context encoder and is configured to encode the first text data into a text context vector.

In some embodiments, the first text data is inputted to a first text pre-encoder for pre-encoding to obtain a first text sequence corresponding to the first text data. The first text sequence is inputted to the first text encoder for encoding to obtain the first text feature representation, and the first sub-feature representation at the first feature position in the first text feature representation is masked to obtain the first masked feature representation.

In some embodiments, the first text feature representation may be masked a plurality of times to obtain a plurality of first masked feature representations.

In some embodiments, after the first text feature representation is obtained, the first text feature representation is masked a plurality of times to obtain a plurality of first masked feature representations.

Operation 440: generate a first prediction of the first sub-feature representation based on the first speech feature representation and the first masked feature representation.

In some embodiments, feature prediction is performed on the first feature position in the first masked feature representation through a first feature predictor.

In some embodiments, the first speech feature representation and the first masked feature representation are inputted to the first feature predictor to obtain the first prediction (first predicted feature representation).

In some embodiments, the first speech sequence is masked while a second positional embedding (a second mask position mark) corresponding to the first sequence position is given.

In some embodiments, the second mask position mark is acquired, and the second mask position mark is configured to mark the first sequence position. Based on the first speech feature representation and the second mask position mark, feature prediction is performed on the first feature position in the first masked feature representation to obtain the first predicted feature representation.

In other embodiments, the first text feature representation is masked while a first mask position mark corresponding to the first feature position is given, and the first speech sequence is masked while the second mask position mark corresponding to the first sequence position is given.

In some embodiments, the first mask position mark and the second mask position mark are acquired. Based on the first speech feature representation, the first mask position mark, and the second mask position mark, feature prediction is performed on the first feature position in the first masked feature representation to obtain the first predicted feature representation.

In some embodiments, the first mask position mark includes at least one of an absolute position mark and a relative position mark. The second mask position mark includes at least one of an absolute position mark and a relative position mark.

In some embodiments, the first speech feature representation, the first masked feature representation, the first mask position mark, and the second mask position mark are inputted to the first feature predictor to obtain the first predicted feature representation.

In some embodiments, if the first text feature representation is masked a plurality of times, each masking generates a first mask position mark. If the first speech sequence is masked a plurality of times, each masking generates a second mask position mark.

One second mask position mark may contain a plurality of sub-marks. Illustratively, for the speech "Shang Shan Da Lao Hu", it is assumed that masking is performed twice. Then, speech segments corresponding to "Shang" and "Hu" are masked for the first time, and the obtained first mask position mark includes mask position marks corresponding to "Shang" and "Hu", respectively. Speech segments corresponding to "Shang" and "Shan" are masked for the second time, and the obtained first mask position mark includes mask position marks corresponding to "Shang" and "Shan", respectively.

Masking on the first text data and the first speech data does not need to be matched, that is, the masking on the first text data and the first speech data is independent of each other.

In some embodiments, a plurality of first speech feature representations, a plurality of first masked feature representations, a plurality of first mask position marks, and a plurality of second mask position marks are inputted to the first feature predictor to obtain a plurality of first predicted feature representations.

Alternatively, the first text feature representation is masked a plurality of times, and the first speech sequence is masked once. In some embodiments, the first speech feature representation, a plurality of first masked feature representations, a plurality of first mask position marks, and the second mask position mark are inputted to the first feature predictor to obtain a plurality of first predicted feature representations.

Alternatively, the first text feature representation is masked once, and the first speech sequence is masked a plurality of times. In some embodiments, a plurality of first speech feature representations, the first masked feature representation, the first mask position mark, and a plurality of second mask position marks are inputted to the first feature predictor to obtain the first predicted feature representation. Illustratively, the plurality of first speech feature representations correspond to predicted feature representations and prediction confidences, and a predicted feature representation having the highest confidence is used as the first predicted feature representation.

The number of first predicted feature representations is the same as the number of times of masking the first text feature representation.

Operation 450: Train the first speech encoder based on a difference between the first prediction and the first sub-feature representation to obtain a trained first speech encoder.

The trained first speech encoder (second speech encoder) is configured to encode the speech data.

In some embodiments, a first loss is determined based on the difference between the first predicted feature representation and the first sub-feature representation. The first speech encoder is trained based on the first loss to obtain the second speech encoder.

Illustratively, when a loss value of the first loss is less than or equal to a preset loss value, the training of the first speech encoder is stopped. Alternatively, when the number of times of training the first speech encoder reaches a preset number of times, the training of the first speech encoder is stopped. A speech encoder obtained when the training is stopped is the second speech encoder.

In some embodiments, a weight corresponding to the first loss may be determined through an influence degree of semantics of the masked first sub-data on semantics of the first speech data.

In some embodiments, a position weight of the first data position is acquired. The position weight is configured for representing an influence degree of missing the first sub-data on the semantics of the first speech data, and the position weight is positively correlated with the influence degree. The first loss is determined based on the difference between the first predicted feature representation and the first sub-feature representation. The first speech encoder is trained based on the first loss and the position weight to obtain the second speech encoder.

Illustratively, when the first speech data is masked, masked first sub-data is acquired, and original semantics of the first speech data and missing semantics of speech data without the first sub-data are analyzed. The semantic similarity degree between the first speech data and the speech data without the first sub-data is less than or equal to a semantic similarity threshold, indicating that a difference between the original semantics of the first speech data and the missing semantics is large. Therefore, the influence degree of the first sub-data on the semantics of the first speech data is large. Correspondingly, the position weight corresponding to the first data position is large.

If the position weight is large, the missing semantics of the first speech data is important. Therefore, it is relatively difficult to predict (which may be understood as reconstructing) the first predicted feature representation, which means that a reconstruction error of the first predicted feature representation may be large. Therefore, a weight corresponding to the loss is relatively large. If the position weight is small, the missing semantics of the first speech data is less important. Therefore, it is less difficult to predict the first predicted feature representation, which means that a reconstruction error of the first predicted feature representation may be small. Therefore, the weight corresponding to the loss is relatively small.

In summary, according to the speech encoder training method provided in this embodiment of this application, after the first speech data and the first text data that have a semantic matching relationship are acquired, the first speech data is encoded through the first speech encoder to obtain the first speech feature representation, and the first text feature representation of the first text data is masked to obtain the first masked feature representation. Then, the masked feature representation in the first text feature representation is predicted through the first speech feature representation, and the first speech encoder is trained based on a difference between a predicted feature representation and an originally masked feature representation to obtain the second speech encoder. The first speech encoder is trained by combining data in a speech modality with data in a text modality, and information included in the data in the text modality is adopted so that the first speech encoder can learn relatively high-level semantic representations of speech, thereby improving the prediction accuracy of representations, which are obtained by encoding through the first speech encoder, on downstream tasks at relatively high semantic levels.

According to the method provided by this embodiment of this application, the first speech data is masked to obtain the first speech feature representation, and the first masked feature representation is predicted according to the masked first speech feature representation so that the natural language abstract representation can be predicted using the distributed context block in the speech data, thereby improving the training effect of speech encoding.

According to the method provided by this embodiment of this application, when the first predicted feature representation is predicted, feature representations of positions that need to be predicted are specified through the first mask position mark, and the position of the masked speech feature is specified through the second mask position mark, thereby further improving the accuracy of the predicted first predicted feature representation and improving the efficiency of predicting the feature.

According to the method provided by this embodiment of this application, the weight corresponding to the first loss is determined using the influence degree of the missing data on the semantics of the first speech data, thereby improving the prediction accuracy of the first predicted feature representation by the model and improving the effect of training the speech encoder.

Illustratively, descriptions are provided using an example in which the first speech feature representation is implemented as a feature representation obtained by masking the first speech data.

FIG. 5 is a schematic diagram of a speech encoder training process. FIG. 5 shows a non-autoregressive multi-modality joint latent representation prediction architecture 500. In the prediction architecture 500, a speech pre-encoder 501, a speech context encoder 502 (denoted by $f_{\theta 1}$), a text pre-encoder 503, a text context encoder 504 (denoted by $f_{\bar{\theta}}$), and a predictor 505 (denoted by $g_{\Phi 1}$) are included.

As shown in FIG. 5, after the text "Shang Shan Da Lao Hu" and the matching speech are acquired, the speech is inputted to the speech pre-encoder 501 for encoding to obtain a speech pre-encoded signal x. The speech pre-encoded signal x is masked, and the masked speech pre-encoded signal x is inputted to the speech context encoder 502 for encoding to obtain a speech feature representation $Z_x$, and a condition variable $C_x$ is generated. $C_x$ refers to a mask position embedding mark (i.e., the foregoing second mask position mark) that specifies a mask position of the inputted speech feature representation $Z_x$ to the predictor 505.

In some embodiments, the speech feature representation $Z_x$ may be masked a plurality of times. The description is provided below using an example in which the speech feature representation $Z_x$ is masked once.

The text is inputted to the text pre-encoder 503 for encoding to obtain a text pre-encoded signal y, the text pre-encoded signal y is inputted to the text context encoder 504 for encoding to obtain a text feature representation, and then a set of masking (i.e., masking a plurality of times) is performed on the text feature representation to obtain a set of text masked feature representation $Z_y(l)$, ..., $Z_y(i)$, ..., and $Z_y(M)$. When the text pre-encoded signal y is masked, condition variables $C_y(1)$, ..., $C_y(i)$, ..., and $C_y(M)$ are provided. $C_y(l)$, ..., $C_y(i)$, ..., and $C_y(M)$ correspond to a set of mask position embedding marks (i.e., the foregoing first mask position marks) that specify a mask position of a text feature to be predicted to the predictor 505.

The masking of x and the masking of y may be independent of each other, and no correspondence is required.

The speech feature representation $Z_x$, the text masked feature representation $Z_y(1)$, ..., $Z_y(i)$, ..., and $Z_y(M)$, the condition variable $C_x$, and the condition variables $C_y(1)$, ..., $C_y(i)$, ..., and $C_y(M)$ are inputted to the predictor 505, and the predictor 505 outputs an $i^{th}$ prediction result $Z(i) = g_{\Phi 1}(Z_x, C_x, Z_y(i), C_y(i))$. As shown in FIG. 5, since masking is performed three times, under the instruction of the three condition variables $C_y$, the predictor 505 outputs three different prediction results Z, each of which represents a predicted feature representation at one mask position.

After the prediction result Z is obtained, a loss corresponding to the prediction result Z needs to be calculated. A process of calculating the loss corresponding to Z may refer to a loss calculation process in the embodiment of FIG. 3, and details are not described herein again.

After the L loss between Z and the target Z* is obtained, parameter update is performed on the modules in the prediction architecture 500 through the loss. Parameter update modules (i.e., learning modules in FIG. 5) include the speech pre-encoder 501, the speech context encoder 502, and the predictor 505. Modules that do not perform parameter update (i.e., freezing modules in FIG. 5) include the text pre-encoder 503 and the text context encoder 504.

In the foregoing embodiment, a random multi-block masking policy is adopted so that the model can predict the natural language abstract representation using sufficiently large, informative, and distributed context blocks in the speech.

The prediction architecture 300 or 500 provided in this embodiment predicts the masking latent embedding of the target signal y using a predictor network of condition variables $c_x$ and $c_y$ according to a compatible signal x. Compared with the limitation of sequentially predicting one by one in an autoregressive method, the training process is essentially different from an autoregressive training process. In this embodiment, data enhancement is not required to obtain enhancement-invariant representations. Instead, when additional information $c_x$ *and* $c_y$ is used as the conditions, the representation of the target in the latent embedding space can be predicted. In addition, in this embodiment, the loss function is applied to the latent embedding space, and an input space does not need to be reconstructed to calculate the loss. Compared with the input space, the latent embedding space has a relatively low dimension and high computational efficiency. The heterogeneity of the x and y modalities and the mutual independence of the corresponding encoders effectively avoid or relieve the problem of representation collapse (that is, regardless of what the input is, the learned representation collapses to one point), thereby ensuring stable training.

After the prediction architecture 300 or 500 is trained, at least one of the speech pre-encoder and the speech context encoder in the prediction architecture 300 or 500 may be used as a speech feature extraction layer to construct a speech processing model corresponding to downstream tasks of speech processing. Alternatively, an entire prediction architecture is used as a pre-trained model, which is adapted or fine-tuned for downstream tasks of speech processing.

In some embodiments, before training the first speech encoder, the first speech encoder needs to be pre-trained, i.e., the first speech encoder is a pre-trained speech encoder obtained by pretraining an untrained speech encoder. Illustratively, as shown in FIG. 6, before operation 220 or operation 421, operation 610 to operation 650 are further included.

Operation 610: Acquire second speech data.

The second speech data is data in a training data set. In some embodiments, speech corresponding to the second speech data is at least one of Chinese speech, English speech, German speech, and the like.

Operation 620: Encode the second speech data through a third speech encoder to obtain a second speech feature representation.

In some embodiments, the third speech encoder refers to a speech context encoder. That is, the second speech feature representation is configured for representing context information of the second speech data. Illustratively, the second speech data is inputted to the third speech encoder to encode the second speech data into a speech context vector. In some embodiments, the third speech encoder may be a speech pre-encoder for pre-encoding a speech into speech pre-encoded signal.

In some embodiments, the second speech data is inputted to the second speech pre-encoder for pre-encoding to obtain a second speech sequence corresponding to the second speech data. The second speech sequence is encoded to obtain the second speech feature representation.

Operation 630: Mask second sub-data at a second data position in the second speech data to obtain second masked data, and encode the second masked data through a fourth speech encoder to obtain a second masked speech feature representation.

In some embodiments, if the second speech feature representation refers to a feature representation obtained by encoding the second speech sequence, a second sub-sequence at a second sequence position in the second speech sequence is masked to obtain the second masked data. The second sequence position corresponds to the second data position, and the second sub-sequence indicates a sequence of the second sub-data.

In some embodiments, the masking may be random, that is, a sequence position in the second speech sequence is randomly selected for masking. Alternatively, the masking may be indicated in advance.

After the second masked data is obtained, the second masked data is encoded through the fourth speech encoder (the untrained speech encoder) to obtain the second masked speech feature representation.

Operation 640: generate a second prediction of the second masked speech feature representation.

In some embodiments, the second prediction (second predicted feature representation) is configured for representing a speech sequence representation at a second sequence position in the second speech sequence.

Alternatively, the second predicted feature representation is configured for representing a feature representation obtained after performing feature completion on the second masked speech feature representation, and the completed feature representation refers to a speech sequence representation at the second sequence position in the second speech sequence.

In some embodiments, masked feature prediction is performed on the second masked speech feature representation through a second feature predictor to obtain the second predicted feature representation.

In some embodiments, the second masked speech feature representation is inputted to the second feature predictor to obtain the second predicted feature representation.

In some embodiments, the second speech sequence is masked while a third mask position mark (third positional embedding) corresponding to the second sequence position is given.

In some embodiments, masked feature prediction is performed on the second masked speech feature representation based on the third mask position mark to obtain the second predicted feature representation.

The third mask position mark is configured for marking the second sequence position. In some embodiments, the third mask position mark includes at least one of an absolute position mark and a relative position mark.

In some embodiments, the second masked speech feature representation and the third mask position mark are inputted to the second feature predictor to obtain the second predicted feature representation.

Illustratively, feature representations of positions that need to be predicted are specified to the second feature predictor through the third mask position mark.

Operation 650: Train the fourth speech encoder based on the second prediction and the second speech feature representation to obtain the pre-trained first speech encoder.

In some embodiments, the second prediction (second predicted feature representation) is configured for representing a speech sequence representation at a second sequence position in the second speech sequence.

In some embodiments, the second speech feature representation includes a second sub-feature representation, and a position of the second sub-feature representation in the second speech feature representation corresponds to the second sequence position.

A second loss is obtained based on a difference between the second predicted feature representation and the second sub-feature representation. The untrained speech encoder (the fourth speech encoder) is trained based on the second loss to obtain the first speech encoder (pre-trained first speech encoder).

In other embodiments, the second predicted feature representation is configured for representing a feature representation obtained after performing feature completion on the second masked speech feature representation.

In some embodiments, the second loss is obtained based on a difference between the second predicted feature representation and the second speech feature representation. The fourth speech encoder is trained based on the second loss to obtain the first speech encoder.

A loss function for calculating the second loss may be implemented as at least one of an L1 loss function, an L2 loss function, a Huber loss function, a cross-entropy loss function, and the like. This is not limited in this embodiment of this application.

In some embodiments, if the structure participating in feature prediction further includes a second speech pre-encoder and a second feature predictor, the second speech pre-encoder is trained based on the second loss to obtain the first speech pre-encoder. The second feature predictor is trained based on the second loss to obtain a third feature predictor. The third feature predictor may be used as the first feature predictor to participate in the training of the first speech encoder.

In some embodiments, encoder structures of the third speech encoder and the fourth speech encoder are the same. The fourth speech encoder, the second speech pre-encoder, and the second feature predictor are updated in a gradient update manner, and the third speech encoder is updated by receiving a parameter of the fourth speech encoder.

In some embodiments, the parameter of the fourth speech encoder is updated based on the second predicted feature representation and the second speech feature representation to obtain a first model parameter corresponding to an updated fourth speech encoder. A parameter of the third speech encoder is updated based on the first model parameter to obtain an updated third speech encoder. The first speech encoder is determined based on the updated third speech encoder.

Illustratively, the parameter of the fourth speech encoder may be transferred to the third speech encoder in an exponential moving average (EMA) manner so that the third speech encoder is updated more smoothly.

After obtaining a third speech encoder obtained from a $t^{th}$ update, a first model parameter of a fourth speech encoder obtained from the $t^{th}$ update is acquired. A second model parameter of a third speech encoder obtained from a $(t-1)^{th}$ update is acquired. Weighted fusion is performed on the first model parameter and the second model parameter according to a preset update parameter to obtain a fused model parameter. Based on the fused model parameter, the third speech encoder obtained from the $(t-1)^{th}$ update is updated to obtain the third speech encoder obtained from the $t^{th}$ update.

Illustratively, a calculation formula of the third speech encoder obtained from the $t^{th}$ update is shown in the following formula 2:

$$\text{Formula 2: } \theta_t \leftarrow \alpha\theta_t + (1-\alpha)\theta_s,$$

where $\theta_t$ refers to the second model parameter of the third speech encoder obtained from the $(t-1)^{th}$ update, $\theta_s$ refers to the first model parameter of the fourth speech encoder obtained from the $t^{th}$ update, and $\alpha$ refers to a hyperparameter (i.e., the preset update parameter).

After the updated third speech encoder is obtained, in response to the updated third speech encoder meeting a training stop condition, the updated third speech encoder is used as the first speech encoder.

Illustratively, the training stop condition refers to the loss value of the second loss being less than or equal to a preset loss value, or the number of times of training reaching a preset number of times. After the training stop condition is met, training is stopped. After the training is stopped, the third speech encoder with parameter update is the first speech encoder obtained through training.

In some embodiments, the speech encoder includes encoding network layers, and the updated third speech encoder includes k encoding network layers, k being a positive integer.

In some embodiments, in response to the updated third speech encoder meeting the training stop condition, a preset encoding network layer is inserted into the k encoding network layers in the updated third speech encoder to obtain the first speech encoder.

If the first speech encoder includes k encoding network layers and the preset encoding network layer, when the first speech encoder is subsequently trained, only the parameter of the preset encoding network layer may be updated to fix parameters of the k encoding network layers. That is, training the first speech encoder based on the difference between the first predicted feature representation and the first sub-feature representation to obtain the second speech encoder further includes:

updating the preset encoding network layer in the first speech encoder based on the difference between the first predicted feature representation and the first sub-feature representation to obtain the second speech encoder.

According to the method provided in this embodiment of this application, before multi-modality training is performed on the first speech encoder, the first speech encoder is pre-trained on data in a speech modality so that the first speech encoder can learn semantics of an initial speech level, thereby improving the multi-modality training effect of the first speech encoder.

According to the method provided in this embodiment of this application, when the first speech encoder is pre-trained, the fourth speech encoder is updated using a gradient update method, and the third speech encoder is updated using a method for receiving the model parameter of the fourth speech encoder, thereby improving the training efficiency of the speech encoder.

According to the method provided in this embodiment of this application, a further preset encoding network layer is added to the updated third speech encoder to obtain the first speech encoder so that when multi-modality training is performed on the first speech encoder subsequently, only the introduced preset encoding network layer is updated, thereby improving the training efficiency of the first speech encoder. In addition, different levels of representations can be formed to correspond to low-medium-high semantics, respectively, thereby satisfying the selection of different types of downstream tasks.

Illustratively, FIG. 7 is a schematic diagram of a speech encoder training process. As shown in FIG. 7, in a prediction architecture 700, a speech pre-encoder 701, a speech context encoder 702 (denoted by $f_\theta$), an EMA speech context encoder 703 (denoted by $f_{\bar{\theta}}$), and a predictor 704 (denoted by $g_\Phi$) are included.

As shown in FIG. 7, after the speech is acquired, the speech is inputted to the speech pre-encoder 701 for encoding to obtain a speech pre-encoded signal x. The speech pre-encoded signal x is masked, and the masked speech pre-encoded signal x is inputted to the speech context encoder 702 for encoding to obtain a speech feature representation $Z_x$, and a condition variable $C_x$ is generated. $C_x$ refers to a mask position embedding mark (i.e., the foregoing third mask position mark) that specifies, to the predictor 704, a mask position of a feature representation that needs to be predicted. The speech feature representation $Z_x$ and the condition variable $C_x$ are inputted to the predictor 704, and the predictor 704 outputs a prediction result Z.

In some embodiments, the speech feature representation $Z_x$ may be masked a plurality of times. The description is provided below using an example in which the speech feature representation $Z_x$ is masked once.

The same speech pre-encoded signal x is not masked, and the target Z* corresponding to a mask position is outputted through the EMA speech context encoder 703.

After the prediction result Z is obtained, a loss corresponding to the prediction result Z and the target Z* needs to be calculated. A loss function of the loss calculation may be implemented as an L2 loss function.

After the loss corresponding to the prediction result Z and the target Z* is obtained, parameter update is performed on the modules in the prediction architecture 700 through the loss. Parameter update modules (i.e., learning modules in FIG. 7) include the speech pre-encoder 701, the speech context encoder 702, and the predictor 704. The EMA speech context encoder 703 is updated by receiving the parameter of the speech context encoder 702 (shown as a freezing module in FIG. 7).

In some embodiments, when the first text data is encoded through the first text encoder to obtain the first text feature representation, before the first speech encoder is trained, the first text encoder further needs to be pre-trained, i.e., the first text encoder is a pre-trained text encoder generated by pre-training an untrained text encoder. Illustratively, as shown in FIG. 8, before operation 220 or operation 411, operation 810 to operation 850 are further included.

Operation 810: Acquire second text data.

The first text data is data in the training data set, and the text corresponding to the first text data is at least one of Chinese text, English text, German text, and the like.

There may be no semantic matching relationship between the second speech data and the second text data, and the second speech data and the second text data are independent of each other.

Operation 820: Encode the second text data through a second text encoder to obtain a second text feature representation.

In some embodiments, the second text encoder refers to a text context encoder. That is, the second text feature representation is configured for representing context information of the second text data. Illustratively, the second text data is inputted to the first text encoder to encode the second text data into a text context vector. In some embodiments, the second text encoder may be a text pre-encoder for pre-encoding text data into text sequence.

In some embodiments, the second text data is inputted to a second text pre-encoder for pre-encoding to obtain a second text sequence corresponding to the second text data. The second text sequence is encoded to obtain the second text feature representation.

Operation 830: Mask third sub-data at a third data position in the second text data to obtain third masked data, and encode the third masked data through a third text encoder to obtain a third text feature representation.

In some embodiments, if the second text feature representation refers to a feature representation obtained by encoding the second text sequence, a third sub-sequence at a third sequence position in the second text sequence is masked to obtain the third masked data. The third sequence position corresponds to the third data position, and the third sub-sequence indicates a sequence of the third sub-data.

In some embodiments, the masking may be random, that is, a sequence position in the second text sequence is randomly selected for masking. Alternatively, the masking may be indicated in advance.

After the third masked data is obtained, the third masked data is encoded through the third speech encoder (untrained text encoder) to obtain the third masked text feature representation.

Operation 840: generate a third prediction of the third masked text feature representation.

In some embodiments, the third prediction (third predicted feature representation) is configured for representing a text sequence representation at a second sequence position in the second text sequence.

Alternatively, the third predicted feature representation is configured for representing a feature representation obtained after performing feature completion on the third text feature representation, and the completed feature representation refers to a text sequence representation at the second sequence position in the second text sequence.

In some embodiments, masked feature prediction is performed on the third text feature representation through a fourth feature predictor to obtain the third predicted feature representation.

In some embodiments, the third text feature representation is inputted to the fourth feature predictor to obtain the third predicted feature representation.

In some embodiments, the second text sequence is masked while a fourth mask position mark (fourth positional embedding) corresponding to the third sequence position is given.

In some embodiments, masked feature prediction is performed on the third text feature representation based on the fourth mask position mark to obtain the third predicted feature representation.

The fourth mask position mark is configured for marking the third sequence position. In some embodiments, the fourth mask position mark includes at least one of an absolute position mark and a relative position mark.

In some embodiments, the third text feature representation and the fourth mask position mark are inputted to the fourth feature predictor to obtain the third predicted feature representation.

Illustratively, feature representations of positions that need to be predicted are specified to the fourth feature predictor through the fourth mask position mark.

Operation 850: Train the third text encoder based on the third predicted feature representation and the second text feature representation to obtain the pre-trained first text encoder.

In some embodiments, the third predicted feature representation is configured for representing a text sequence representation at a second sequence position in the second text sequence.

In some embodiments, the second text feature representation includes a third sub-feature representation, and a position of the third sub-feature representation in the second text feature representation corresponds to the masked third sequence position.

A third loss is obtained based on a difference between the third predicted feature representation and the third sub-feature representation. The third text encoder (untrained text encoder) is trained based on the third loss to obtain the pre-trained first text encoder.

In other embodiments, the third predicted feature representation is configured for representing a feature representation obtained after performing feature completion on the third text feature representation.

In some embodiments, the second loss is obtained based on a difference between the third predicted feature representation and the second text feature representation. The third text encoder is trained based on the third loss to obtain the first text encoder.

A loss function for calculating the third loss may be implemented as at least one of an L1 loss function, an L2 loss function, a Huber loss function, a cross-entropy loss function, and the like. This is not limited in this embodiment of this application.

In some embodiments, if the structure participating in feature prediction further includes a second text pre-encoder and a fourth feature predictor, the second text pre-encoder is trained based on the second loss to obtain the first text pre-encoder. The fourth feature predictor is trained based on the third loss to obtain a fifth feature predictor. The fifth feature predictor may be used as the first feature predictor to participate in the training of the first speech encoder.

In some embodiments, the second feature predictor and the fourth feature predictor are the same predictor, which is represented by a target feature predictor herein. A parameter in the target feature predictor is updated using the second speech data and the second text data to obtain a feature predictor, and the feature predictor is used as the first feature predictor to participate in the training of the first speech encoder.

Alternatively, the fourth feature predictor is obtained by training the second feature predictor. That is, the second feature predictor is trained based on the second loss to obtain the fourth feature predictor. Then, the fourth feature predictor is trained based on the third loss to obtain the fifth feature predictor. Alternatively, the second feature predictor is obtained by training the fourth feature predictor. That is, the fourth feature predictor is trained based on the third loss to obtain the second feature predictor. Then, the second feature predictor is trained based on the second loss to obtain the third feature predictor.

In other embodiments, different training processes (i.e., the pre-training process of the first text encoder and the training and pre-training processes of the first speech encoder) have different feature predictors. The feature predictors are independent of each other and do not have an association with each other. For example, the fifth feature predictor obtained through training may not be used as initialization of the first feature predictor.

In some embodiments, encoder structures of the second text encoder and the third text encoder are the same. The third text encoder, the second text pre-encoder, and the fourth feature predictor are updated in a gradient update manner, and the second text encoder is updated by receiving a parameter of the third text encoder.

Illustratively, the parameter of the third text encoder is transferred to the second text encoder in an EMA manner so that the second text encoder is updated more smoothly. A parameter transfer manner may refer to a method for updating the third speech encoder in operation 650, and details are not described herein again.

Illustratively, when a loss value of the third loss is less than or equal to a preset loss value, the training of the third text encoder is stopped. Alternatively, the number of times of training the third text encoder reaches a preset number of times. The training of the third text encoder is stopped. After the training is stopped, the second text encoder with parameter update is the first text encoder obtained through training.

According to the method provided in this embodiment of this application, before multi-modality training is performed on the first speech encoder, the first text encoder is pre-trained on data in a text modality so that the first text encoder can learn semantics of an initial text level, thereby improving the multi-modality training effect of the first speech encoder.

Illustratively, FIG. 9 is a schematic diagram of a text encoder training process. As shown in FIG. 9, in a prediction architecture 900, a text pre-encoder 901, a text context encoder 902 (denoted by $f_\theta$), an EMA text context encoder 903 (denoted by $f_{\bar{\theta}}$), and a predictor 904 (denoted by $g_\Phi$) are included.

As shown in FIG. 9, after the text "Yi Er San Si Wu" is acquired, the text is inputted to the text pre-encoder 901 for encoding to obtain a text pre-encoded signal y. The text pre-encoded signal y is masked, and the masked text pre-encoded signal y is inputted to the text context encoder 902 for encoding to obtain a text feature representation $Z_y$, a condition variable $C_y$ is generated. $C_y$ refers to a mask position embedding mark (i.e., the foregoing fourth mask position mark) that specifies, to the predictor 904, a mask position of a feature representation that needs to be predicted. The text feature representation $Z_y$ and the condition variable $C_y$ are inputted to the predictor 904, and the predictor 904 outputs a prediction result Z.

In some embodiments, the text feature representation $Z_y$ may be masked a plurality of times. The description is provided below using an example in which the text feature representation $Z_y$ is masked a plurality of times.

The same text pre-encoded signal y is not masked, and the target Z* corresponding to a plurality of mask positions is outputted through the EMA text context encoder 903.

After the prediction result Z is obtained, a loss corresponding to the prediction result Z and the corresponding target Z* needs to be calculated. The loss calculation may refer to a loss calculation manner in the embodiment of FIG. 3, and details are not described herein again.

After the loss corresponding to the prediction result Z and the target Z* is obtained, parameter update is performed on the modules in the prediction architecture 900 through the loss. Parameter update modules (i.e., learning modules in FIG. 9) include the text pre-encoder 901, the text context encoder 902, and the predictor 904. The EMA text context encoder 903 is updated by receiving the parameter of the text context encoder 902 (shown as a freezing module in FIG. 9).

In some embodiments, when the first speech data is implemented as a masked speech data obtained by masking the first speech data, the first speech encoder may further be trained using an attention mechanism and a text processing model in combination with data in the text modality and the speech modality. Illustratively, as shown in FIG. 10, operation 1010 to operation 1080 may further be implemented in the foregoing embodiment.

Operation 1010: Acquire first speech data and first text data.

A semantic matching relationship exists between the first speech data and the first text data.

In some embodiments, the semantic matching relationship existing between the first speech data and the first text data refers to semantic similarity degree between speech content of the first speech data and text content of the first text data being greater than or equal to a preset similarity threshold.

Operation 1020: Mask first sub-data at a first data position in the first speech data to obtain first masked data.

In some embodiments, the first speech data is inputted to a first speech pre-encoder for pre-encoding to obtain a first speech sequence corresponding to the first speech data. A first sub-sequence at a first sequence position in the first speech sequence is masked to obtain the first masked data. The first sequence position corresponds to the first data position, and the first sub-sequence indicates a sequence of the first sub-data.

In some embodiments, the first speech sequence may be masked a plurality of times to obtain a plurality of pieces of first masked data.

In some embodiments, after the first speech sequence is obtained, the first speech sequence is masked a plurality of times to obtain a plurality of pieces of first masked data. Different first masked data corresponds to different first sequence positions, and first sub-sequences at the different first sequence positions are different.

Operation 1030: Encode the first masked data through the first speech encoder to obtain the first speech feature representation.

In some embodiments, the first speech encoder refers to a speech context encoder. That is, the first speech feature representation is configured for representing context information of the first masked data. Illustratively, the first masked data is inputted to the first speech encoder to encode the first masked data into a speech context vector.

In some embodiments, if the first speech sequence is masked a plurality of times, a plurality of pieces of first masked data need to be encoded to obtain a plurality of first speech feature representations.

Operation 1040: generate a fourth prediction of the first speech feature representation.

The fourth prediction (fourth predicted feature representation) is configured for representing a predicted speech feature representation at a masked first data position in the first speech data.

In some embodiments, the fourth predicted feature representation is configured for representing a predicted speech sequence representation at a masked first sequence position in the first speech sequence.

In some embodiments, masked feature prediction is performed on the first speech feature representation through a first feature predictor to obtain the fourth predicted feature representation.

In some embodiments, the first speech feature representation is inputted to the first feature predictor to obtain the fourth predicted feature representation.

In some embodiments, the first speech sequence is masked while a second mask position mark corresponding to the first sequence position is given.

In some embodiments, masked feature prediction is performed on the first speech feature representation based on the second mask position mark to obtain the fourth predicted feature representation.

In some embodiments, the first speech feature representation and the second mask position mark are inputted to the first feature predictor to obtain the fourth predicted feature representation.

Illustratively, feature representations of positions that need to be predicted are specified to the first feature predictor through the second mask position mark.

Operation 1050: Extract a text feature representation of the first text data through a text processing model.

Illustratively, the text processing model may be implemented as an LLM, and the LLM includes at least one of ChatGPT, a GPT series, LLaMA2, and the like.

In some embodiments, the text feature representation may be a feature representation outputted by an embedding layer (input layer) in the text processing model, or may be a feature representation outputted by an intermediate layer. This is not limited in this embodiment of this application.

In some embodiments, the data inputted to the text processing model further contains prompt information corresponding to the first text data, and the prompt information is configured for prompting a decoding process of the first text data by the text processing model.

Illustratively, the prompt information includes at least one of field knowledge (for example, a recognized field is "children’s literature", "sports news", or "game commentary"), prior information (for example, a topic is about "delicious food" and "travel", and a recognized scene is "business conference", "court", or "talk show"), a previous sentence (for example, a recognition result of the previous sentence of "Shang Shan Da Lao Hu" is "Yi Er San Si Wu"), condition information (for example, "restaurant environment", "conversational style", or "reading style"), and the like. This is not limited in this embodiment of this application.

In some embodiments, the prompt information is extracted through the text processing model to perform a corresponding prompt text feature representation.

The prompt text feature representation may be a feature representation outputted by the embedding layer in the text processing model, or may be a feature representation outputted by the intermediate layer. This is not limited in this embodiment of this application.

Operation 1060: Perform attention calculation on the text feature representation and the fourth prediction through an attention layer in the text processing model to obtain a target feature representation.

In some embodiments, the attention calculation includes at least one of self-attention calculation, cross-attention calculation, and the like. This is not limited in this embodiment of this application.

Descriptions are provided using an example in which the cross-attention calculation and the self-attention calculation are performed in the attention layer. In some embodiments, cross-attention calculation is performed on the text feature representation and the fourth predicted feature representation through the attention layer in the text processing model to obtain a candidate feature representation. Self-attention calculation is performed on the candidate feature representation through the attention layer in the text processing model to obtain the target feature representation.

Illustratively, cross-attention calculation is first performed. The cross-attention calculation is performed using the fourth predicted feature representation as a key and a value in the cross-attention calculation and using the text feature representation as a query in the cross-attention calculation. Specifically, for the text feature representation, a query vector is generated for each sub-feature representation in the text feature representation. For the fourth predicted feature representation, two vectors, i.e., a key vector and a value vector, are generated for each sub-feature representation in the fourth predicted feature representation. The key vector is configured for matching the query vector, and the value vector is configured for calculating the attention weight and performing weighted summation. Similarities between a single query vector and all key vectors are calculated to obtain association degrees between each query vector and the key vectors. The similarity calculation method includes: dot product calculation, scaling dot product calculation, and the like. This is not limited in this embodiment of this application. The similarity is converted into an attention weight using a softmax function. The attention weight is configured for representing the importance of each sub-feature representation in the fourth predicted feature representation relative to each sub-feature representation in the text feature representation. Weighted summation is performed on the value vectors through the attention weight to obtain a result of the weighted summation as a cross-attention calculation result, and the candidate feature representation is determined based on the cross-attention calculation result.

Then, self-attention calculation is performed. Specifically, for the adjusted text feature representation, three vectors, i.e., a key vector, a value vector, and a query vector, are generated for each sub-feature representation in the adjusted text feature representation. The key vector is configured for matching the query vector, and the value vector is configured for calculating the attention weight and performing weighted summation. A process of calculating a self-attention calculation result may refer to the calculation process in the foregoing cross-attention calculation, and details are not described herein again. After the self-attention calculation result is obtained, the target feature representation is determined according to the self-attention calculation result.

If the data inputted to the text processing model further includes prompt information, the prompt information does not enter the attention layer, that is, does not participate in attention calculation.

Operation 1070: decode the target feature representation through the text processing model to obtain predicted text data.

In some embodiments, the text processing model further includes an output layer. The target feature representation is predicted through the output layer to obtain the predicted text data.

Illustratively, the foregoing prediction process belongs to an autoregressive method, that is, the prediction process is generative. For example, the target feature representation is decoded to obtain the predicted text data. The decoding process belongs to the autoregressive method, that is, the decoding process is generative. The target feature representation corresponds to w decoding moments. At each decoding moment, one word is selected from the dictionary as an output of the decoder, and text formed by w words outputted at the w decoding moments is the predicted text data.

In some embodiments, before the foregoing output layer, another network layer (i.e., the intermediate layer) is further connected. Then, the target feature representation is inputted to the another network layer and then inputted to the output layer. A feature representation outputted by the another network layer is predicted through the output layer to obtain the predicted text data.

In some embodiments, if the data inputted to the text processing model includes prompt information corresponding to the first text data, the target feature representation and the prompt text feature representation are predicted to obtain the predicted text data.

In some embodiments, there may be one or more attention layers in the text processing model. When there are a plurality of attention layers, the plurality of attention layers may be consecutive. That is, after the target feature representation is obtained through i attention layers, the target feature representation and the fourth predicted feature representation are inputted to an $(j+1)^{th}$ attention layer to perform attention calculation as described in operation 1060 to obtain a corresponding feature representation. A feature representation outputted by the last attention layer is predicted through the text processing model to obtain the predicted text data.

Alternatively, the plurality of attention layers are not consecutive and are inserted into the text processing model at intervals. That is, after the target feature representation is obtained through the $i^{th}$ attention layer, the target feature representation is inputted to an intermediate layer connected after the $i^{th}$ attention layer in the text processing model to obtain an intermediate layer feature representation. The intermediate layer feature representation and the fourth predicted feature representation are inputted to the $(i+1)^{th}$ attention layer to perform attention calculation as described in operation 1060 to obtain a corresponding feature representation. The feature representation outputted by the last attention layer is predicted through the text processing model to obtain the predicted text data.

Operation 1080: Train the first speech encoder based on a difference between the predicted text data and the first text data to obtain the trained first speech encoder.

In some embodiments, a fourth loss is obtained based on the difference between the predicted text data and the first text data. The first speech encoder is trained based on the fourth loss to obtain the trained first speech encoder.

The second speech encoder (i.e., the trained first speech encoder) is configured to encode the speech data.

In some embodiments, a loss function for calculating the fourth loss may be implemented as at least one of a cross-entropy loss function, an average negative log-likelihood (NLL) loss function, and the like.

Illustratively, when a loss value of the fourth loss is less than or equal to a preset loss value, the training of the first speech encoder is stopped. Alternatively, the number of times of training the first speech encoder reaches a preset number of times. The training of the first speech encoder is stopped, and a speech encoder obtained when the training is stopped is the second speech encoder.

In some embodiments, if the structure participating in feature prediction further includes the foregoing first speech pre-encoder and first feature predictor, when the first speech encoder is trained, a structure that performs parameter update includes the first speech pre-encoder, the first speech encoder, the first feature predictor, and the attention layer in the text processing model, and a structure that does not perform parameter update (i.e., parameter freezing) includes a network layer except the attention layer, such as the input layer, the output layer, and the intermediate layer.

In summary, according to the speech encoder training method provided in this embodiment of this application, under the condition that a pre-trained text processing model is given, the first speech encoder is efficiently trained with multiple modalities, thereby improving the training efficiency of the first speech encoder.

Illustratively, FIG. 11 is a schematic diagram of a speech encoder training process. FIG. 11 shows an LLM-based multi-modality joint latent representation prediction architecture 1100. In the prediction architecture 1100, a speech pre-encoder 1101, a speech context encoder 1102 (denoted by $f_{\theta 1}$), an LLM module 1103 (denoted by $f_{\bar{\theta}}$), and a predictor 1104 (denoted by $g_{\Phi 1}$) are included.

The LLM module 1103 may adopt an LLaMA model or an LLaMA2 model with 7 billion parameters, which contains 32 layers, with each latent layer having a representation dimension of 4,096.

As shown in FIG. 11, after the speech is acquired, the speech is inputted to the speech pre-encoder 1101 for encoding to obtain a speech pre-encoded signal x. The speech pre-encoded signal x is masked, and the masked speech pre-encoded signal x is inputted to the speech context encoder 1102 for encoding to obtain a speech feature representation $Z_x$, and a condition variable $C_x$ is generated. $C_x$ refers to a mask position embedding mark (i.e., the foregoing second mask position mark). The speech feature representation $Z_x$ and the condition variable $C_x$ are inputted to the predictor 1104, and the predictor 1104 outputs a prediction result Z.

In some embodiments, the speech feature representation $Z_x$ may be masked a plurality of times. The description is provided below using an example in which the speech feature representation $Z_x$ is masked once.

The text "Shang Shan Da Lao Hu" and prompt information "children's literature" that match the speech are acquired. The text "Shang Shan Da Lao Hu" and the prompt information "children's literature" are encoded through an encoder in the LLM module 1103 to obtain a text feature representation and a prompt text feature representation.

An identifier recognizing the beginning /s/ is introduced between the text and the prompt information. A previous representation of the identifier represents the prompt information, and a subsequent representation of the identifier represents information predicted by a decoder of the LLM module 1103. The prompt text feature representation corresponding to the prompt information is not inputted to a cross-attention module of the LLM module 1103 so that a first latent embedding representation in the cross-attention module can correspond to the beginning of the text feature representation.

As shown in FIG. 11, specifically, representations of the speech modality, i.e., the prediction results Z, are used as keys and values in the cross-attention calculation, and outputs of the intermediate layer of the LLM module 1103 are used as queries in the cross-attention calculation. After a cross-attention calculation result is obtained, the outputs of the intermediate layer are adjusted through the cross-attention calculation result to obtain a target feature representation, and the target feature representation and the prompt text feature representation are predicted through the output layer in the LLM module 1103 to obtain predicted text. Finally, a cross-entropy loss between the predicted text and the target text is calculated to perform parameter update on modules in the prediction architecture 1100. Parameter update modules (i.e., learning modules in FIG. 11) include the speech pre-encoder 1101, the speech context encoder 1102, and the predictor 1104.

In a training process, in the LLM module 1103 that has been pre-trained, modules except newly inserted modules containing cross-attention (i.e., freezing modules in FIG. 11) remain unchanged, and only the newly inserted modules containing cross-attention (i.e., learning modules in FIG. 11) are updated. These modules are usually inserted into an upper layer of the LLM module 1103 to improve the training efficiency and avoid the calculation of unnecessary low-layer gradients.

In some embodiments, the foregoing cross-attention calculation is implemented through gated cross-attention and feed-forward network modules.

Illustratively, there are 16 gated cross-attention and feed-forward network modules, with each latent layer having four attention heads and a representation dimension of 256. These modules are inserted into the LLaMA module to be alternately arranged with 16 layers on an original top of the LLaMA module.

As shown in the following formula 3 and formula 4, $w_1$ and $w_2$ are learnable parameters. A tanh (·) gating mechanism is configured for controlling the cross-attention calculation. The gating mechanism is configured for controlling the extent to which the representation of the speech modality, i.e., the prediction result Z, affects a final output recognition result (i.e., the predicted text).

$$\text{Formula 3: } Y = \tanh(w_1) \odot \mathrm{MHA}(K, V, Q) + Q;$$

$$\text{formula 4: } \hat{Y} = \tanh(w_2) \odot \mathrm{MHA}(Y) + Y,$$

where K, V, and Q represent a key, a value, and a query in multi-head attention calculation, respectively. As described above, the representations of the speech modality are used as keys and values in the cross-attention calculation, and latent states from the LLM intermediate layer are used as queries in the cross-attention calculation.

MHA represents multi-head cross-attention calculation. Self-attention calculation (for example, dot product calculation) is performed on each head, and then results are concatenated. Finally, a concatenated result is added to an original query vector Q, and an output $Y$ is obtained through the $\tanh(\cdot)$ gating mechanism. Then, self-attention calculation (for example, dot product calculation) is performed on the output $Y$, a calculation result is added to the output $Y$, and a final output $\hat{Y}$ is obtained through the $\tanh(\cdot)$ gating mechanism. $Y$ is an output result of the current attention layer and may be used as an input of a next attention layer.

In an early training stage, $w_1$ and $w_2$ may gradually increases from 0 with a training iteration process so that the impact of the representation of the speech modality on a final output result gradually increases from none in the training process, thereby improving the stability of model training.

Hereinafter, a structure of a context encoder involved in the foregoing embodiment is described. The encoder includes a speech context encoder and a text context encoder. Illustratively, FIG. 12 is a schematic structural diagram of a context encoder. As shown in FIG. 12, a context encoder 1200 contains a plurality of encoding network layers 1201, and each encoding network layer 1201 is implemented as a transformer architecture of an attention module. Generally, the context encoder 1200 contains 12 layers of attention modules. In addition, in a specific architecture example of the predictor, a lightweight one-dimensional convolutional network containing D (typically, D=6) layers may be adopted.

The implementation of details of each attention module may refer to FIG. 13. As shown in FIG. 13, operations in the encoding network layer 1301 include a self-attention operation, a dropout operation, a normalization operation, a plus sign indicating a residual connection, and a full connection operation.

Illustratively, the speech encoder or prediction structure obtained through training in the embodiments of this application can be applied to a plurality of projects and product applications including an intelligent speech interaction, an intelligent speech assistant, an ASR system, an audio/video conferencing system, and an in-vehicle speech interaction system and used as an upstream pre-training module to provide representations of strong generalization, high performance, and universal robustness for multiple downstream tasks such as machine ASR and speech sentiment recognition and generation, thereby improving the performance of the downstream tasks and improving the user experience.

FIG. 14 shows an example of application of a latent representation prediction module 1400 (for example, a language context encoder) obtained through training in an intelligent speech interaction product according to this embodiment. The latent representation prediction module 1400 may fully use supervision information from large-scale natural languages and massive multi-domain text knowledge to learn and predict latent representations so that a system adaptively generalizes to interaction tasks such as recognition and generation oriented to downstream fields.

An example of effects of the embodiments of this application in related products, such as in application scenes such as intelligent speech interaction and intelligent speech assistant, is provided. A product such as an intelligent speech assistant obtained through training using the embodiments of this application has a very wide scope of application and may be applied to various industries such as entertainment, education, medical treatment, business, and family. The digital humans trained using the embodiments of this application are more applied to fields such as virtual hosts, customer service, and marketing promotion, and also have a wide range of application scenes.

Traditional product solutions greatly limit the generalization and availability of the system. For example, for an ASR applied to a game commentary scene, an external language model trained using game commentary text, a customized timbre, a sentiment rhythm, and the like are required. After the latent representation prediction module in this embodiment of this application completes pre-training, a text modality model obtained based on massive natural languages enables the latent representation prediction module to be zero-shot transferred to downstream tasks. In addition, without adding any supervised training for a particular data set, the latent representation prediction module can learn useful, multi-semantic-level, and universal representations to achieve good performance in the downstream tasks, and can fully use the flexibility and advantages of the prompt technology from LLM, thereby achieving scalability and high efficiency. In aspects such as a multi-domain language model, timbre, and sentiment rhythm, the latent representation prediction module is more easily transferred and can be adaptively generalized to interaction tasks such as recognition and speech generation oriented to downstream fields. For example, FIG. 14 shows an image of a virtual person 1401, dialog speech recognition, speech generation and optimization, and a self-service use method of a standby medical instrument device in the medical field.

A traditional speech-to-text system usually includes an acoustic model and an external language model. The acoustic model is trained on a marked speech data set, and the language model is trained on a text data set. However, when conditions, fields, and data distribution change, such a system usually needs to acquire a corresponding marked speech data set in a targeted manner and then retrain or fine-tune the acoustic model, and needs to adjust the external language model. For example, in a speech-to-text system applied to the game commentary scene, a language model trained using game commentary text is externally connected. The foregoing greatly limits the generalization and availability of the system.

Different from the language model used in the traditional speech-to-text system, in this embodiment, a link is established between a speech modality and a text modality, thereby leveraging a significantly broader and more readily acquired learning target source based on massive text. In addition, this embodiment not only supports joint pre-training from scratch, but also supports using a pre-trained text processing model. In addition, this embodiment not only supports training using the non-autoregressive method, but also supports training using the autoregressive method. In this embodiment, after training is completed, the text modality model obtained based on massive natural languages enables the prediction structure to be zero-shot transferred to downstream tasks, without adding any supervised training for a particular data set.

In this embodiment, useful, multi-semantic-level, and universal speech representations may be learned without relying on manual data enhancement or expansion on speech data. Due to the general universality of the natural language, the natural language can express and supervise a very wide range of abstract semantics or concepts. In this embodiment, a high-level semantic representation of speech is learned using information included in the natural language, and a representation that benefits from learning is at a relatively high semantic level. The speech encoder obtained through training is further extensible and highly efficient. That is, prediction is performed in a high-level semantic abstract representation space, thereby significantly reducing a total calculation amount required for self-supervised pre-training.

In addition, relative to unsupervised and single-modality self-supervised learning methods, in the method of combining large-scale natural languages in this application, not only the speech representation is learned, but also the speech representation is associated with the natural language, thereby achieving the flexibility of zero-shot transfer transformation. On the contrary, in a traditional supervised learning method, learning needs to be performed from marked training samples. In this embodiment, after training, due to the mapping formed between the learned speech abstract representation and the natural language, the model can be zero-shot transferred to the downstream tasks. In this embodiment, when conditions, fields, and data distribution of the downstream tasks change, good generalization is provided. In addition, if a segment of text prompt corresponding to the condition, field, and data distribution is provided, this embodiment can effectively and automatically adapt to a corresponding zero-shot or few-shot scene, achieving strong performance on out-of-vocabulary words and out-of-domain data sets. Meanwhile, the multi-semantic-level representation learned in this embodiment is applicable to a wider range of tasks: better performance is achieved on low-semantic-level tasks such as speech enhancement and separation. It is competitive with speech data manual enhancement (or view-invariance) training methods on semantic tasks such as ASR.

In summary, the speech encoder training method provided in this embodiment of this application is alternatively referred to as a speech latent representation prediction learning method. When a pre-training model obtained using the method is adapted or fine-tuned and then applied to various downstream tasks, the performance of the downstream tasks can be improved. The embodiments of this application ensure representation universality, architecture flexibility and scalability, and performance of downstream tasks. The flexibility may be embodied from implementation instances of the foregoing provided solution in different conditions: a multi-modality latent representation including text and speech with context information can not only be jointly trained from the beginning, but also jointly trained efficiently under the condition of a given pre-trained text processing model. According to the solution of this application, diverse, massive, and heterogeneous multi-modality data, rather than single-modality and homogeneous data, can be fully mined, thereby improving the quality, robustness, and reliability of the overall model. The semantic level of the self-supervised representation may be improved without using additional prior knowledge such as speech data manual enhancement, thereby effectively reducing the probability of human-perceived low-level errors, and improving the performance of the downstream tasks.

FIG. 15 is a structural block diagram of a speech encoder training apparatus according to an exemplary embodiment of this application. As shown in FIG. 15, the apparatus includes the following parts:

an acquisition module 1510 configured to acquire first speech data and first text data, wherein a semantic similarity degree between the first speech data and the first text data is greater than or equal to a preset similarity threshold;

an encoding module 1520 configured to encode the first speech data through a speech encoder to obtain a first speech feature representation;

a masking module 1530 configured to acquire a first text feature representation of the first text data, the first text feature representation including a plurality of sub-feature representations; and mask a first sub-feature representation among the plurality of sub-feature representations at a first feature position in the first text feature representation to obtain a first masked feature representation;

a prediction module 1540 configured to generate a first prediction of the first sub-feature representation based on the first speech feature representation and the first masked feature representation; and

a training module 1550 configured to train the speech encoder based on a difference between the first prediction and the first sub-feature representation to obtain a trained speech encoder, the trained speech encoder being configured to encode speech data.

In some embodiments, the prediction module 1540 is configured to: acquire a first mask position mark (first positional embedding) indicating the first feature position; and generate the first prediction of the sub-first feature representation based on the first speech feature representation, the first masked feature representation and the first mask position mark.

In some embodiments, the first speech data is masked speech data generated by masking first sub-data at a first data position in the unmasked speech data; and the encoding module 1520 is configured to: encode the masked speech data through the speech encoder to obtain the first speech feature representation.

In some embodiments, the prediction module 1540 is configured to: acquire a first mask position mark (first positional embedding) and a second mask position mark (second positional embedding), the first mask position mark being configured for indicating the first feature position, and the second mask position mark being configured for indicating the first data position; and generate the first prediction of the first sub-feature representation based on the first speech feature representation, the first masked feature representation, the first mask position mark, and the second mask position mark.

In some embodiments, the training module 1550 is configured to: acquire a position weight of the first data position, the position weight representing an influence degree of missing the first sub-data on semantics of the first speech data, and the position weight being positively correlated with the influence degree; determine a first loss based on the difference between the first prediction (first predicted feature representation) and the first sub-feature representation; and train the speech encoder based on the first loss and the position weight to obtain the trained speech encoder.

In some embodiments, the speech encoder is a pre-trained speech encoder obtained by pre-training an untrained speech encoder; the training module 1550 is configured to: acquire second speech data; encode the second speech data through a third speech encoder (speech pre-encoder) to obtain a second speech feature representation; mask second sub-data at a second data position in the second speech data to obtain second masked data, and encode the second masked data through a fourth speech encoder (the untrained speech encoder) to obtain a second masked speech feature representation; generate a second prediction of the second masked speech feature representation; and train the fourth speech encoder (untrained speech encoder) based on the second prediction and the second speech feature representation to obtain the pre-trained speech encoder.

In some embodiments, the training module 1550 is configured to: update a parameter (first model parameter) of the fourth speech encoder (untrained speech encoder) based on the second prediction (second predicted feature representation) and the second speech feature representation to obtain an updated fourth speech encoder; update a parameter (second model parameter) of the third speech encoder (speech pre-encoder) based on the first model parameter to obtain an updated third speech encoder; and determine the first speech encoder (pre-trained speech encoder) based on the updated third speech encoder.

In some embodiments, the updated speech pre-encoder includes k encoding network layers, k being an integer; the training module 1550 is configured to: generate, in response to the updated third speech encoder meeting a training stop condition, the pre-trained speech encoder by combining a preset encoding network layer with the k encoding network layers of the updated third speech encoder.

The training the speech encoder (first speech encoder) based on the difference between the first predicted feature representation (first prediction) and the first sub-feature representation to obtain the trained speech encoder (second speech encoder) includes: updating the preset encoding network layer in the first speech encoder based on the difference between the first predicted feature representation and the first sub-feature representation to obtain the second speech encoder.

In some embodiments, the encoding module 1520 is configured to: encode the first text data through a text encoder (first text encoder) to obtain the first text feature representation.

In some embodiments, the text encoder is a pre-trained text encoder generated by pre-training an untrained text encoder; the training module 1550 is configured to: acquire second text data; encode the second text data through a second text encoder (text pre-encoder) to obtain a second text feature representation; mask third sub-data at a third data position in the second text data to obtain third masked data, and encode the third masked data through a third text encoder (untrained text encoder) to obtain a third masked text feature representation; generate a third prediction of the third masked text feature representation; and train the third text encoder (untrained text encoder) based on the third prediction (third predicted feature representation) and the second text feature representation to obtain the pre-trained text encoder.

In some embodiments, the training module 1550 is configured to: generate a fourth prediction of the masked first sub-data, i.e., perform masked feature prediction on the first speech feature representation to obtain a fourth predicted feature representation, the fourth predicted feature representation being configured for representing a predicted speech feature representation at a masked first data position in the first speech data; extract a text feature representation of the first text data through a text processing model; perform attention calculation on the text feature representation and the fourth prediction (fourth predicted feature representation) through an attention layer in the text processing model to obtain a target feature representation; predict (decode) the target feature representation through the text processing model to obtain predicted text data; and train the speech encoder (the first speech encoder) based on a difference between the predicted text data and the first text data to obtain the trained speech encoder (the second speech encoder).

In summary, according to the speech encoder training apparatus provided in this embodiment of this application, after the first speech data and the first text data that have a semantic matching relationship are acquired, the first speech data is encoded through the first speech encoder to obtain the first speech feature representation, and the first text feature representation of the first text data is masked to obtain the first masked feature representation. Then, the masked feature representation in the first text feature representation is predicted through the first speech feature representation, and the first speech encoder is trained based on a difference between a predicted feature representation and an originally masked feature representation to obtain the second speech encoder. The first speech encoder is trained by combining data in a speech modality with data in a text modality, and information included in the data in the text modality is adopted so that the first speech encoder can learn relatively high-level semantic representations of speech, thereby improving the prediction accuracy of representations, which are obtained by encoding through the first speech encoder, on downstream tasks at relatively high semantic levels.

The speech encoder training apparatus provided in the foregoing embodiment is illustrated only with an example of division of the foregoing function modules. In practical application, the foregoing functions may be allocated to and completed by different function modules according to requirements. That is, the internal structure of the device is divided into different function modules to complete all or some of the functions described above. In addition, the speech encoder training apparatus provided in the foregoing embodiment belongs to the same idea as the speech encoder training method embodiment. The specific implementation process may refer to the method embodiment. Details are not described herein again.

FIG. 16 is a structural block diagram of an electronic device 1600 according to an exemplary embodiment of this application. The electronic device 1600 may be a portable mobile terminal, such as a smartphone, an in-vehicle terminal, a tablet computer, a moving picture experts group audio layer III (MP3) player, a moving picture experts group audio layer IV (MP4) player, a notebook computer, or a desktop computer. The electronic device 1600 may alternatively be referred to as another name such as a user device, a portable terminal, a laptop terminal, or a desktop terminal.

Generally, the electronic device 1600 includes a processor 1601 and a memory 1602.

The processor 1601 may include one or more processing cores, for example, a 4-core processor or an 8-core processor. The processor 1601 may be implemented in at least one hardware form of a digital signal processor (DSP), a field-programmable gate array (FPGA), and a programmable logic array (PLA). The processor 1601 may further include a main processor and a coprocessor. The main processor is a processor configured to process data in an awake state and is alternatively referred to as a central processing unit (CPU). The coprocessor is a low-power-consumption processor configured to process data in a standby state. In some embodiments, the processor 1601 may be integrated with a graphics processing unit (GPU). The GPU is configured to render and draw content that needs to be displayed on a display screen. In some embodiments, the processor 1601 may further include an AI processor. The AI processor is configured to process computing operations related to ML.

The memory 1602 may include one or more computer-readable storage media. The computer-readable storage medium may be non-transient. The memory 1602 may further include a high-speed random access memory (RAM) and a nonvolatile memory, for example, one or more disk storage devices or flash storage devices. In some embodiments, the non-transient computer-readable storage medium in the memory 1602 is configured to store at least one instruction, and the at least one instruction is configured to be executed by the processor 1601 to implement the speech encoder training method provided in the method embodiments of this application.

In some embodiments, the electronic device 1600 further includes one or more sensors. The one or more sensors include, but are not limited to, a proximity sensor, a gyroscope sensor, and a pressure sensor.

In some embodiments, the electronic device 1600 further includes other component parts. A person skilled in the art may understand that the structure shown in FIG. 16 constitutes no limitation on the electronic device 1600, and the electronic device may include more or fewer components than those shown in the figure, or some components may be combined, or a different component arrangement may be used.

The embodiments of this application further provide a computer device. The computer device may be implemented as the terminal or the server shown in FIG. 2. The computer device includes a processor and a memory, the memory having at least one instruction, at least one program, a code set, or an instruction set stored therein, the at least one instruction, the at least one program, the code set, or the instruction set being loaded and executed by the processor to implement the speech encoder training method provided in the foregoing method embodiments.

The embodiments of this application further provide a non-transitory computer-readable storage medium, having at least one instruction, at least one program, a code set, or an instruction set stored therein, the at least one instruction, the at least one program, the code set, or the instruction set being loaded and executed by a processor to implement the speech encoder training method provided in the foregoing method embodiments.

The embodiments of this application further provide a computer program product or a computer program, including a computer instruction. The computer instruction is stored in a non-transitory computer-readable storage medium. A processor of a computer device reads the computer instruction from the computer-readable storage medium and executes the computer instruction to cause the computer device to perform the speech encoder training method in any one of the foregoing embodiments.

In some embodiments, the computer-readable storage medium may include: a read-only memory (ROM), an RAM, a solid state drive (SSD), an optical disc, or the like. The RAM may include a resistance random access memory (ReRAM) and a dynamic random access memory (DRAM). The sequence numbers of the foregoing embodiments of this application are merely for the purpose of description and do not represent the advantages and disadvantages of the embodiments.

A person skilled in the art may understand that all or some of the operations of the foregoing embodiments may be implemented by hardware, or may be implemented by a program instructing relevant hardware. The program may be stored in a non-transitory computer-readable storage medium. The foregoing storage medium may be an ROM, a magnetic disk, an optical disc, or the like.

The foregoing descriptions are merely exemplary embodiments of this application, but are not intended to limit this application. Any modification, equivalent replacement, or improvement made within the spirit and principle of this application shall fall within the protection scope of this application.

The foregoing descriptions are merely exemplary implementations of this application. A person skilled in the art may further make several improvements and modifications without departing from the principle of this application, and the improvements and modifications fall within the protection scope of this application.

## Claims

**1.** A method for training a speech encoder, comprising:

acquiring first speech data and first text data, wherein a semantic similarity degree between the first speech data and the first text data is greater than or equal to a preset similarity threshold;
encoding the first speech data through a speech encoder to obtain a first speech feature representation;
acquiring a first text feature representation of the first text data, the first text feature representation comprising a plurality of sub-feature representations; and masking a first sub-feature representation among the plurality of sub-feature representations at a first feature position in the first text feature representation to obtain a first masked feature representation;
generating a first prediction of the first sub-feature representation based on the first speech feature representation and the first masked feature representation; and
training the speech encoder based on a difference between the first prediction and the first sub-feature representation to obtain a trained speech encoder, the trained speech encoder being configured to encode speech data.

**2.** The method according to claim 1, wherein the generating the first prediction of the first sub-feature representation based on the first speech feature representation and the first masked feature representation comprises:

acquiring a first mask position embedding indicating the first feature position; and
generating the first prediction of the first sub-feature representation based on the first speech feature representation, the first masked feature representation and the first mask position embedding.

**3.** The method according to claim 1, wherein the first speech data is masked speech data generated by masking first sub-data at a first data position in unmasked speech data.

**4.** The method according to claim 3, wherein the generating the first prediction of the first sub-feature representation based on the first speech feature representation and the first masked feature representation comprises:

acquiring a first mask position embedding indicating the first feature position and a second mask position embedding indicating the first data position; and
generating the first prediction of the first sub-feature representation based on the first speech feature representation, the first masked feature representation, the first mask position embedding, and the second mask position embedding.

5. The method according to claim 4, wherein the training the speech encoder based on the difference between the first prediction and the first sub-feature representation to obtain the trained speech encoder comprises:

acquiring a position weight of the first data position, the position weight representing an influence degree of missing the first sub-data on semantics of the first speech data, and the position weight being positively correlated with the influence degree;
determining a first loss based on the difference between the first prediction and the first sub-feature representation; and
training the speech encoder based on the first loss and the position weight to obtain the trained speech encoder.

6. The method according to any one of claims 1 to 5, wherein the speech encoder is a pretrained speech encoded obtained by pretraining an untrained speech encoder; the pretraining comprising:

acquiring second speech data;
encoding the second speech data through a speech pre-encoder to obtain a second speech feature representation;
masking second sub-data at a second data position in the second speech data to obtain second masked data, and encoding the second masked data through the untrained speech encoder to obtain a second masked speech feature representation;
generating a second prediction of the second masked speech feature representation; and
training the untrained speech encoder based on the second predicted and the second speech feature representation to obtain the pre-trained speech encoder.

7. The method according to claim 6, wherein the untrained speech encoder and the speech pre-encoder have a same structure; the training the untrained speech encoder based on the second prediction and the second speech feature representation to obtain the pre-trained speech encoder comprises:

updating a first model parameter of the untrained speech encoder based on the second prediction and the second masked speech feature representation to obtain an updated untrained speech encoder;
updating a second model parameter of the speech pre-encoder based on the updated first model parameter to obtain an updated speech pre-encoder; and
determining the pre-trained speech encoder based on the updated speech pre-encoder.

8. The method according to claim 7, wherein the updated speech pre-encoder comprises k encoding network layers, k being a positive integer; the determining the pre-trained speech encoder based on the updated speech pre-encoder comprises:

in response to the updated speech pre-encoder meeting a training stop condition, generating the pre-trained speech encoder by combining a preset encoding network layer with the k encoding network layers of the updated speech pre-encoder; and
the training the speech encoder based on the difference between the first prediction and the first sub-feature representation to obtain the trained speech encoder comprises:
updating the preset encoding network layer in the speech encoder based on the difference between the first prediction and the first sub-feature representation to obtain the trained speech encoder.

9. The method according to any one of claims 1 to 5, wherein the acquiring the first text feature representation of the first text data comprises:
encoding the first text data through a text encoder to obtain the first text feature representation.

10. The method according to claim 9, wherein the text encoder is a pre-trained text encoder generated by pre-training an untrained text encoder, the pre-training comprising:

acquiring second text data;
encoding the second text data through a text pre-encoder to obtain a second text feature representation;
masking third sub-data at a third data position in the second text data to obtain third masked data, and encoding the third masked data through the untrained text encoder to obtain a third masked text feature representation;
generating a third prediction of the third masked text feature representation; and
training the untrained text encoder based on the third prediction and the second text feature representation to obtain the pre-trained text encoder.

**11.** The method according to claim 3, further comprising:

generating a fourth prediction of the masked first sub-data ;
extracting a text feature representation of the first text data through a text processing model;
performing attention calculation on the text feature representation and the fourth prediction through an attention layer in the text processing model to obtain a target feature representation;
decoding the target feature representation through the text processing model to obtain predicted text data; and
training the speech encoder based on a difference between the predicted text data and the first text data.

**12.** An apparatus for training a speech encoder, comprising:

an acquisition module configured to acquire first speech data and first text data, wherein a semantic similarity degree between the first speech data and the first text data is greater than or equal to a preset similarity threshold;
an encoding module configured to encode the first speech data through a speech encoder to obtain a first speech feature representation;
a masking module configured to acquire a first text feature representation of the first text data, the first text feature representation comprising a plurality of sub-feature representations; and mask a first sub-feature representation among the plurality of sub-feature representations at a first feature position in the first text feature representation to obtain a first masked feature representation;
a prediction module configured to generate a first prediction of the first sub-feature representation based on the first speech feature representation and the first masked feature representation; and
a training module configured to train the speech encoder based on a difference between the first prediction and the first sub-feature representation to obtain a trained speech encoder, the trained speech encoder being configured to encode speech data.

**13.** A computer device, comprising a processor and a memory, the memory having at least one instruction stored therein, and the at least one instruction being loaded and executed by the processor to implement the method according to any one of claims 1 to 11.

**14.** A computer-readable storage medium, having at least one instruction stored therein, the at least one instruction being loaded and executed by a processor to implement the method according to any one of claims 1 to 11.

**15.** A computer program product, comprising a computer program, the computer program, when executed by a processor, implementing the method according to any one of claims 1 to 11.

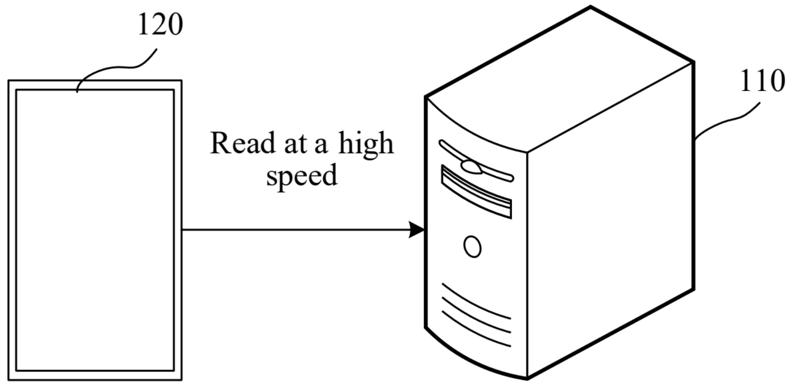
120
110
Read at a high speed

FIG. 1

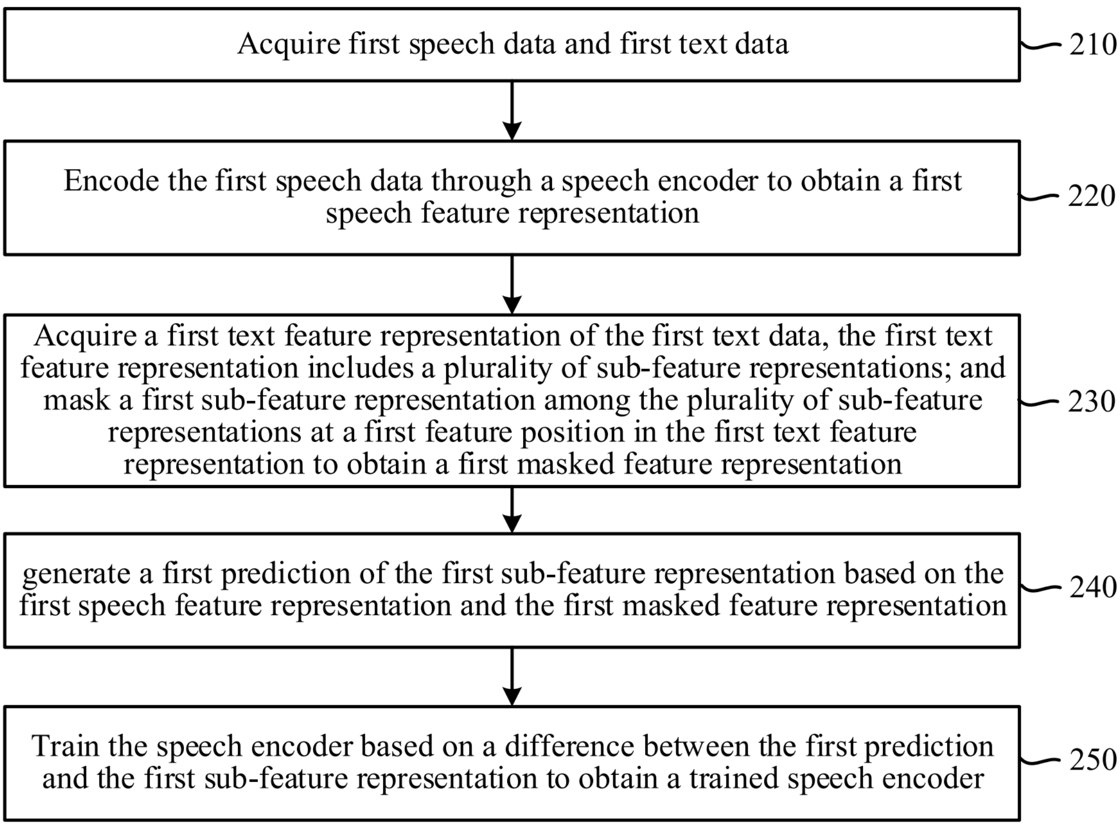
Acquire first speech data and first text data
210
Encode the first speech data through a speech encoder to obtain a first speech feature representation
220
Acquire a first text feature representation of the first text data, the first text feature representation includes a plurality of sub-feature representations; and mask a first sub-feature representation among the plurality of sub-feature representations at a first feature position in the first text feature representation to obtain a first masked feature representation
230
generate a first prediction of the first sub-feature representation based on the first speech feature representation and the first masked feature representation
240
Train the speech encoder based on a difference between the first prediction and the first sub-feature representation to obtain a trained speech encoder
250

FIG. 2

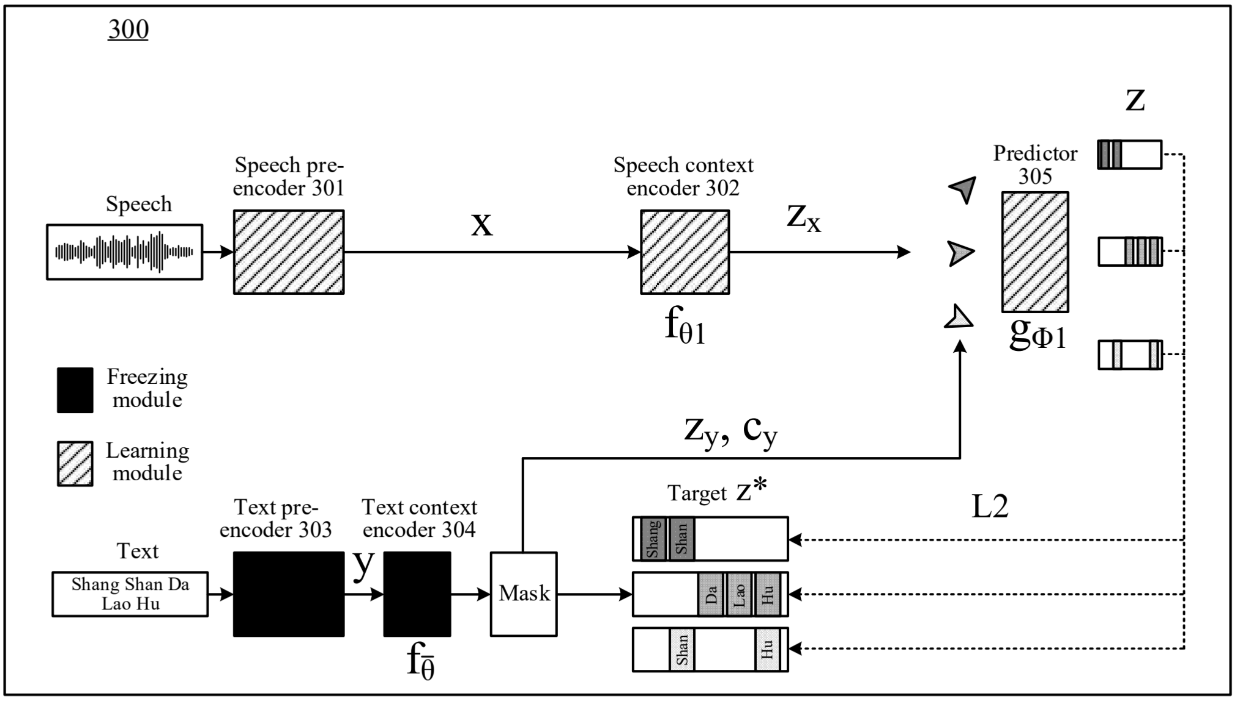
300
Speech
Speech pre-encoder 301
x
Speech context encoder 302
$z_x$
$f_{\theta 1}$
Predictor 305
$g_{\Phi 1}$
z
Freezing module
Learning module
$z_y$, $c_y$
Target $z^*$
L2
Text
Shang Shan Da Lao Hu
Text pre-encoder 303
y
Text context encoder 304
$f_{\bar{\theta}}$
Mask
Shang
Shan
Da
Lao
Hu
Shan
Hu

FIG. 3

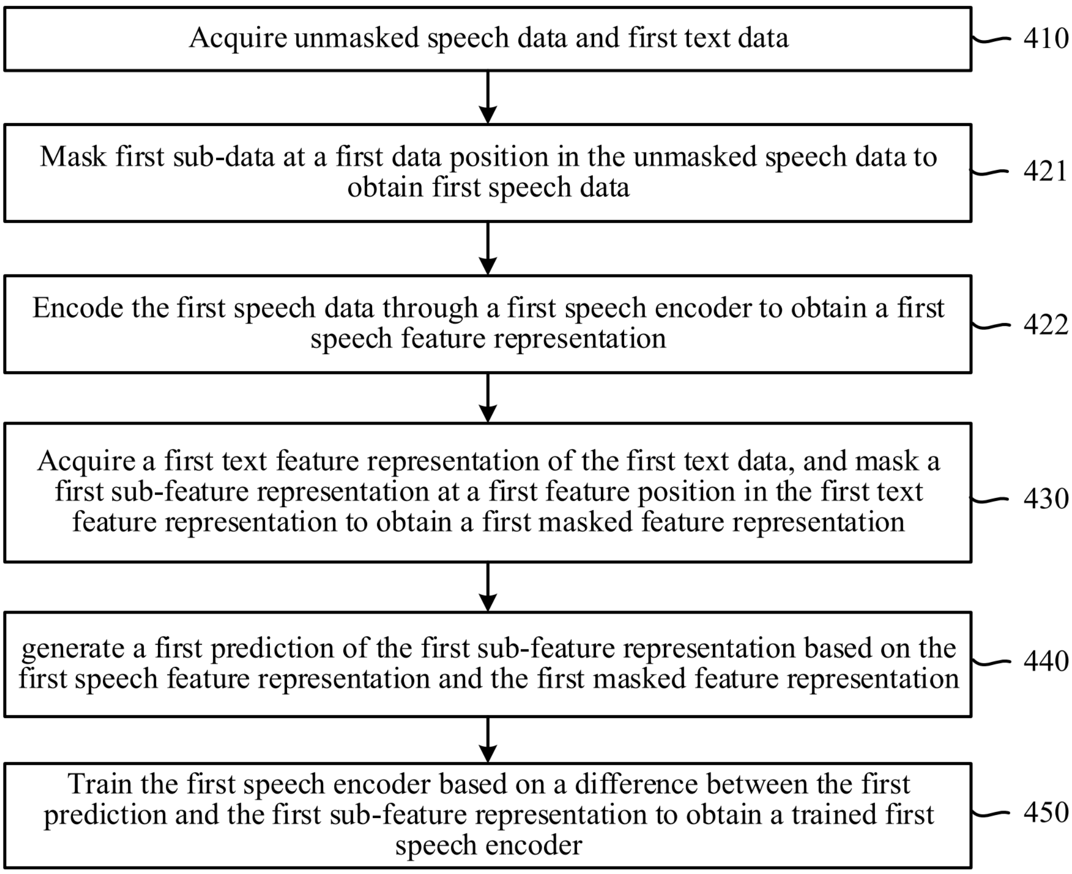
Acquire unmasked speech data and first text data
410
Mask first sub-data at a first data position in the unmasked speech data to obtain first speech data
421
Encode the first speech data through a first speech encoder to obtain a first speech feature representation
422
Acquire a first text feature representation of the first text data, and mask a first sub-feature representation at a first feature position in the first text feature representation to obtain a first masked feature representation
430
generate a first prediction of the first sub-feature representation based on the first speech feature representation and the first masked feature representation
440
Train the first speech encoder based on a difference between the first prediction and the first sub-feature representation to obtain a trained first speech encoder
450

FIG. 4

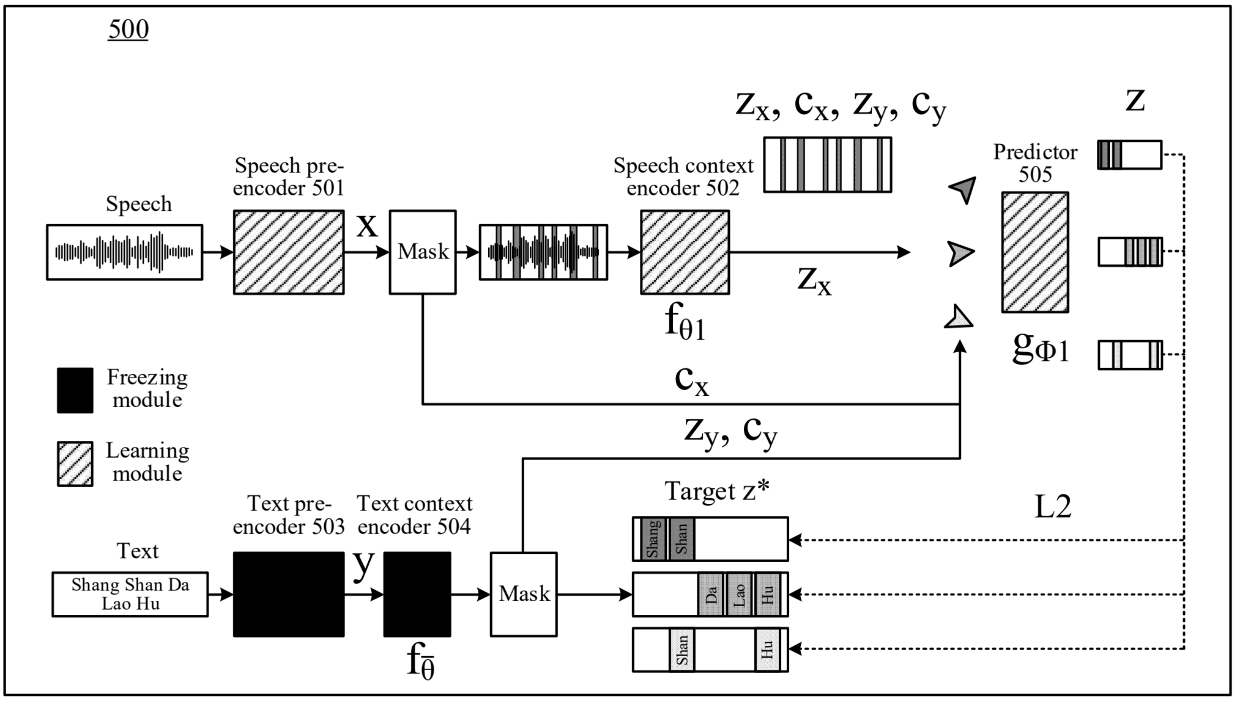
500
Speech
Speech pre-encoder 501
x
Mask
Speech context encoder 502
$f_{\theta 1}$
$z_x, c_x, z_y, c_y$
$z_x$
$c_x$
$z_y, c_y$
Predictor 505
$g_{\Phi 1}$
z
L2
Freezing module
Learning module
Text
Shang Shan Da Lao Hu
Text pre-encoder 503
y
Text context encoder 504
$f_{\bar{\theta}}$
Mask
Target z*
Shang
Shan
Da
Lao
Hu
Shan
Hu

FIG. 5

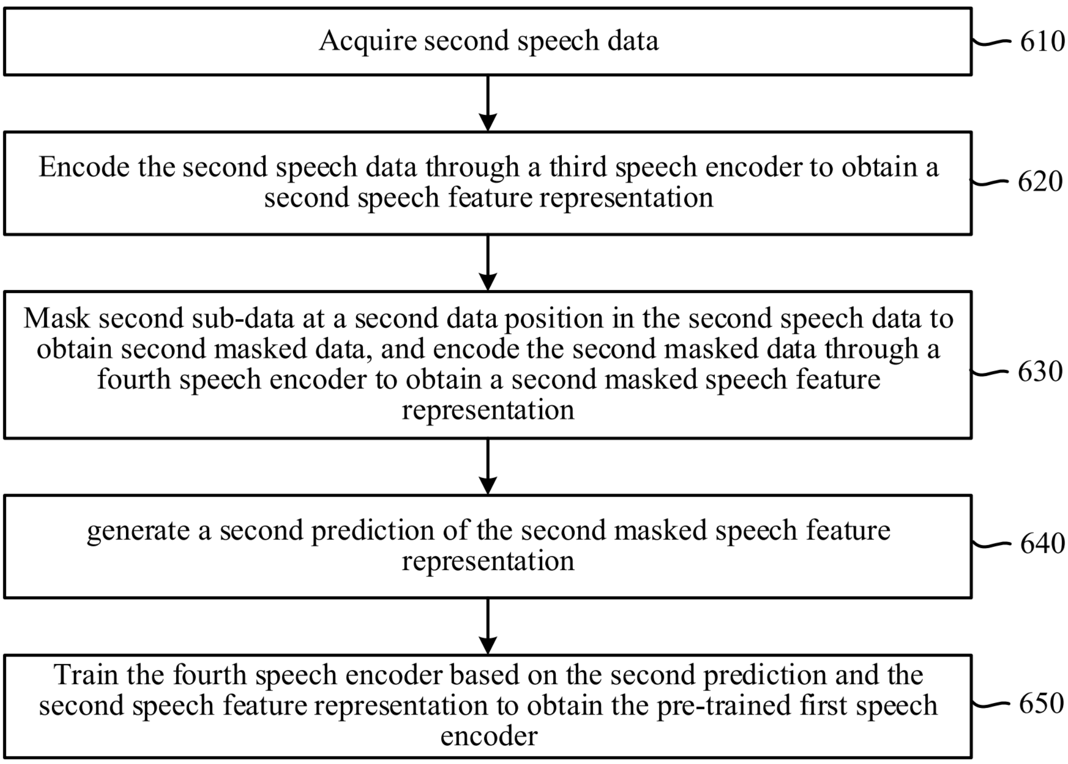
Acquire second speech data
610
Encode the second speech data through a third speech encoder to obtain a second speech feature representation
620
Mask second sub-data at a second data position in the second speech data to obtain second masked data, and encode the second masked data through a fourth speech encoder to obtain a second masked speech feature representation
630
generate a second prediction of the second masked speech feature representation
640
Train the fourth speech encoder based on the second prediction and the second speech feature representation to obtain the pre-trained first speech encoder
650

FIG. 6

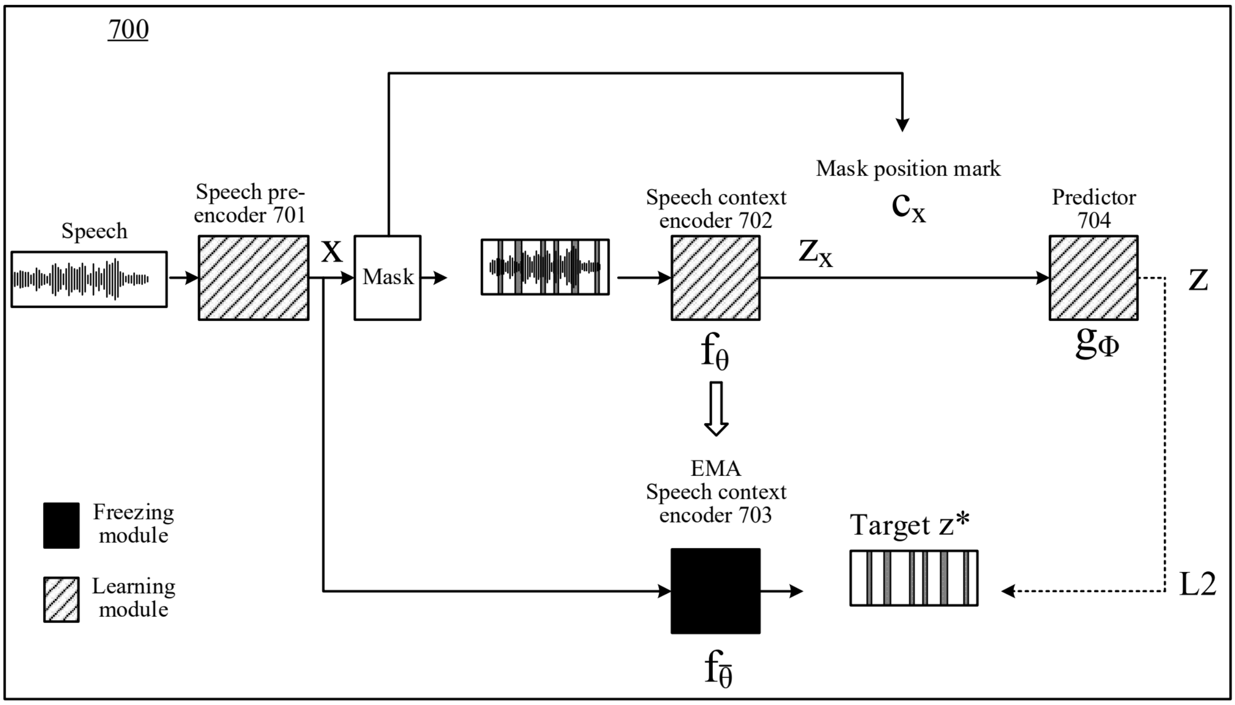
700
Mask position mark
$c_X$
Speech pre-encoder 701
Speech
X
Mask
Speech context encoder 702
$Z_X$
Predictor 704
Z
$f_\theta$
$g_\Phi$
EMA Speech context encoder 703
Freezing module
Learning module
Target z*
L2
$f_{\bar{\theta}}$

FIG. 7

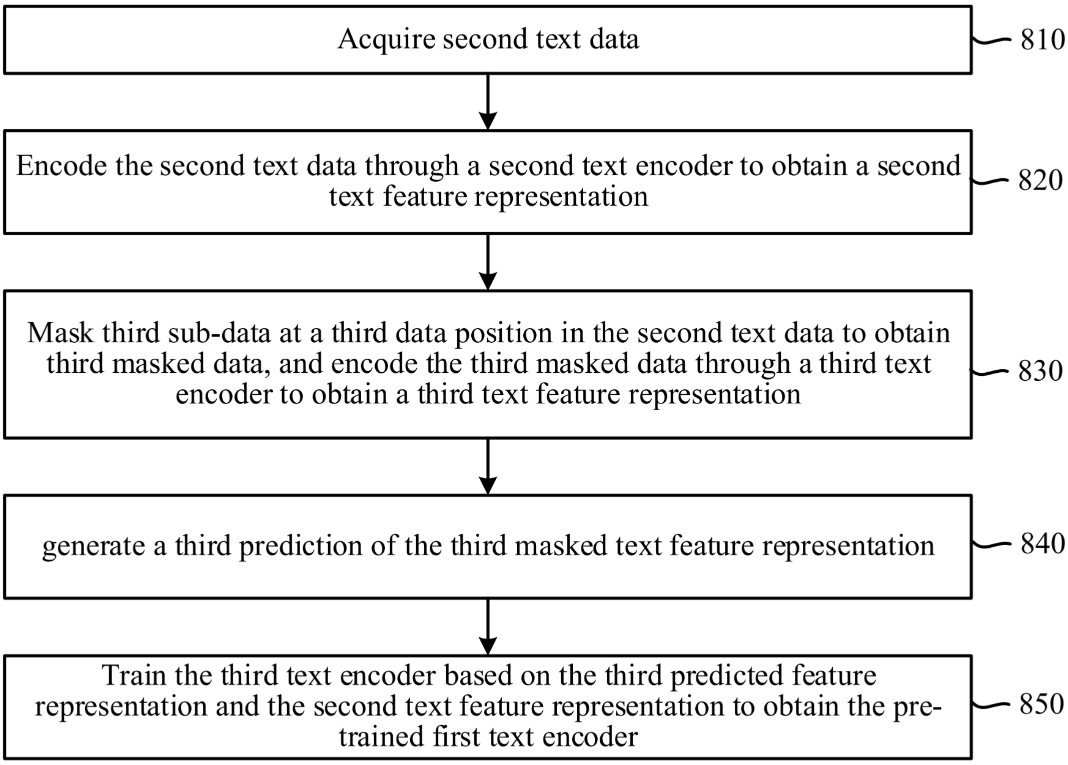
Acquire second text data
810
Encode the second text data through a second text encoder to obtain a second text feature representation
820
Mask third sub-data at a third data position in the second text data to obtain third masked data, and encode the third masked data through a third text encoder to obtain a third text feature representation
830
generate a third prediction of the third masked text feature representation
840
Train the third text encoder based on the third predicted feature representation and the second text feature representation to obtain the pre-trained first text encoder
850

FIG. 8

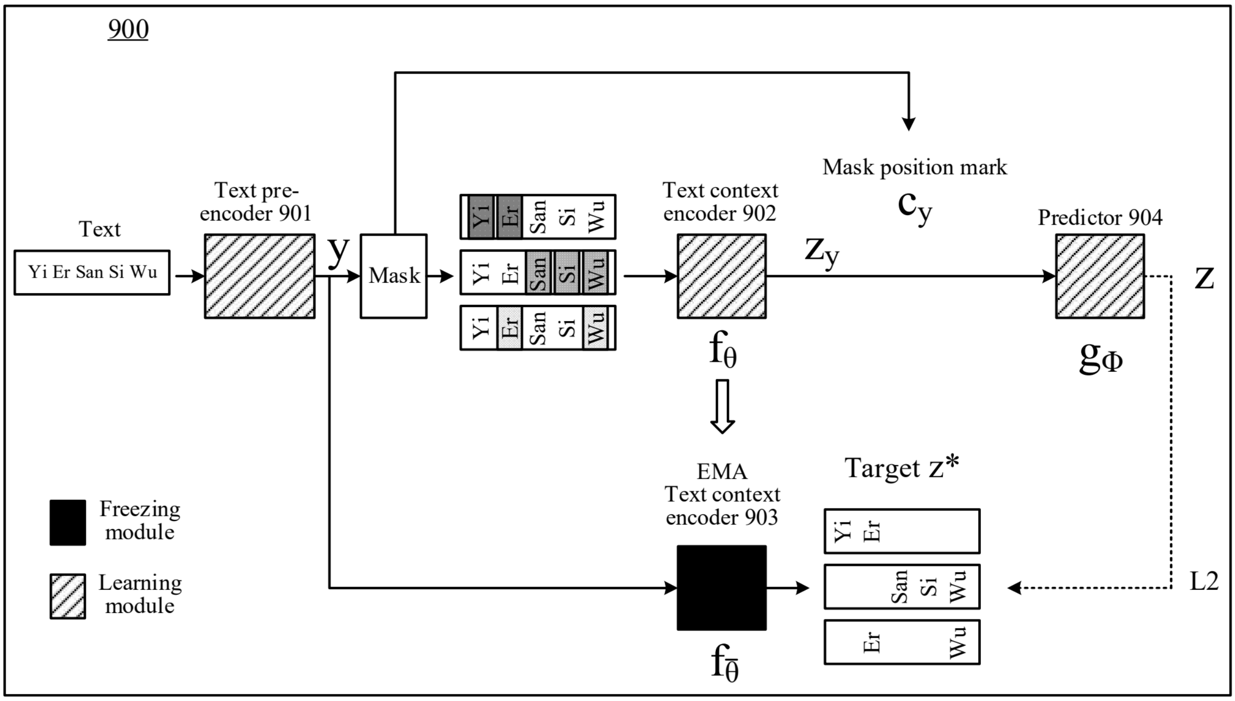
900
Text
Yi Er San Si Wu
Text pre-encoder 901
y
Mask
Yi Er San Si Wu
Yi Er San Si Wu
Yi Er San Si Wu
Text context encoder 902
$f_\theta$
$z_y$
Mask position mark
$c_y$
Predictor 904
$g_\Phi$
z
EMA Text context encoder 903
$f_{\bar{\theta}}$
Target z*
Yi Er
San Si Wu
Er Wu
L2
Freezing module
Learning module

FIG. 9

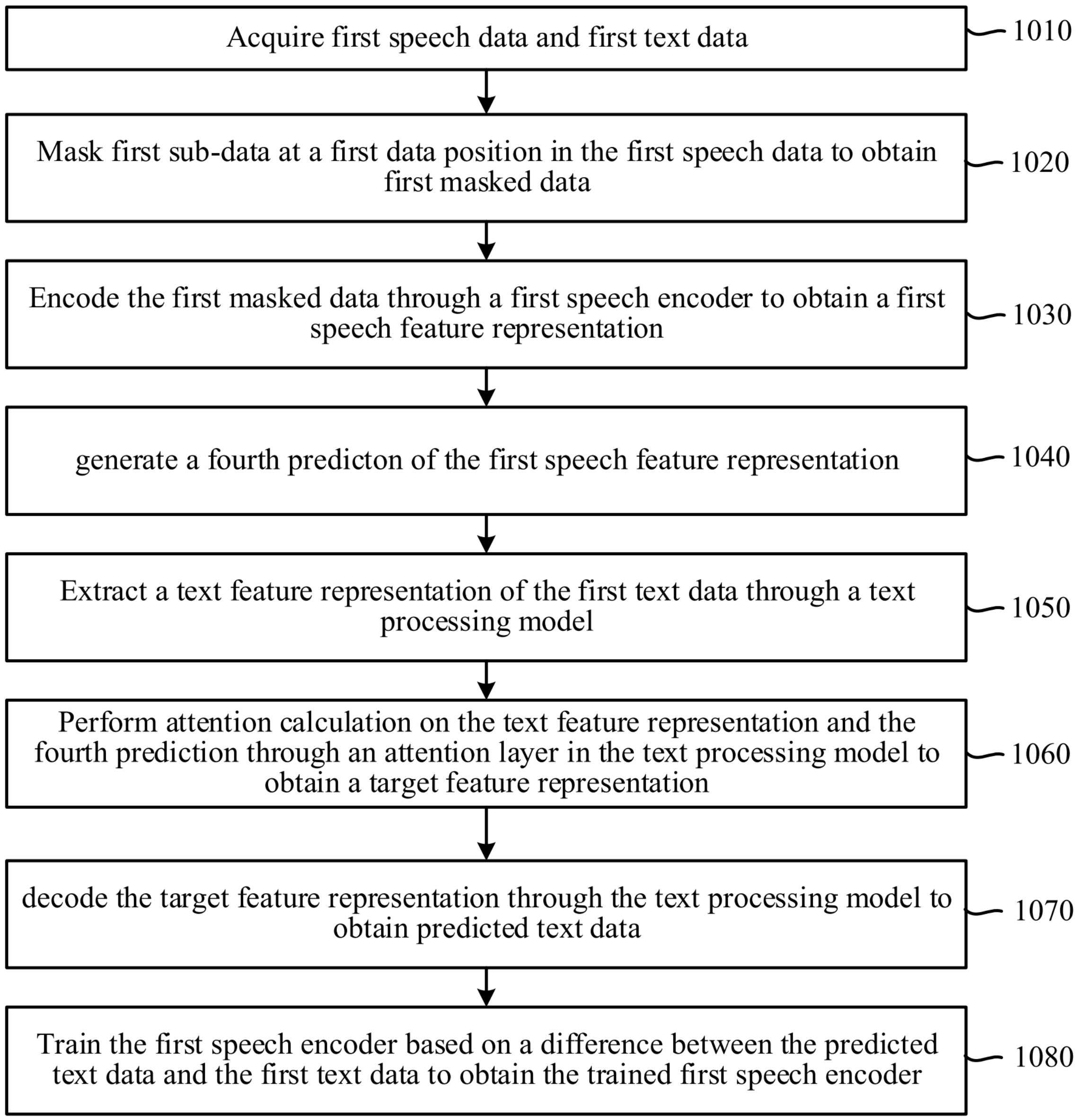
Acquire first speech data and first text data
1010
Mask first sub-data at a first data position in the first speech data to obtain first masked data
1020
Encode the first masked data through a first speech encoder to obtain a first speech feature representation
1030
generate a fourth predicton of the first speech feature representation
1040
Extract a text feature representation of the first text data through a text processing model
1050
Perform attention calculation on the text feature representation and the fourth prediction through an attention layer in the text processing model to obtain a target feature representation
1060
decode the target feature representation through the text processing model to obtain predicted text data
1070
Train the first speech encoder based on a difference between the predicted text data and the first text data to obtain the trained first speech encoder
1080

FIG. 10

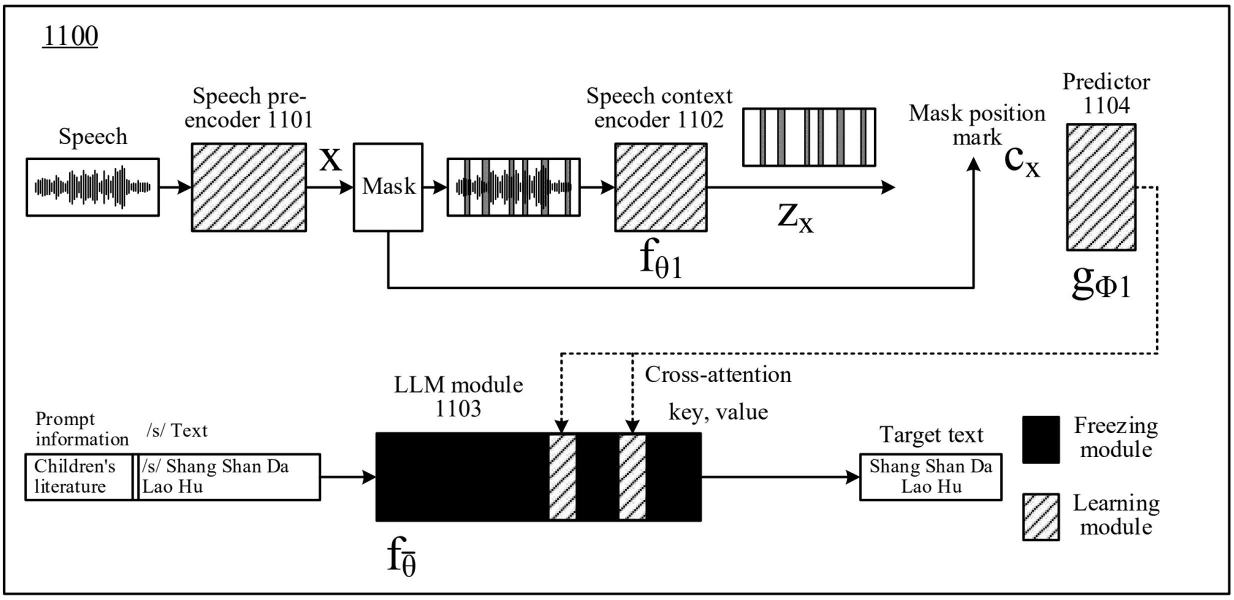


FIG. 11

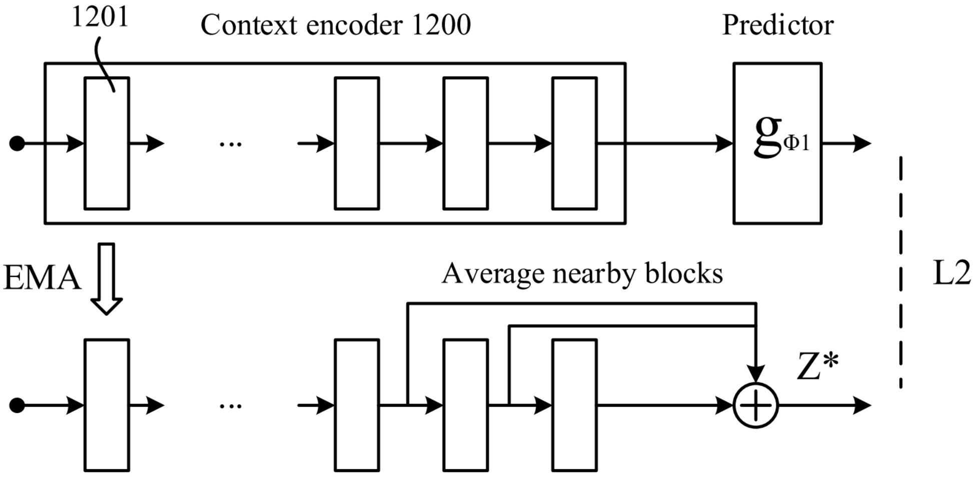


FIG. 12

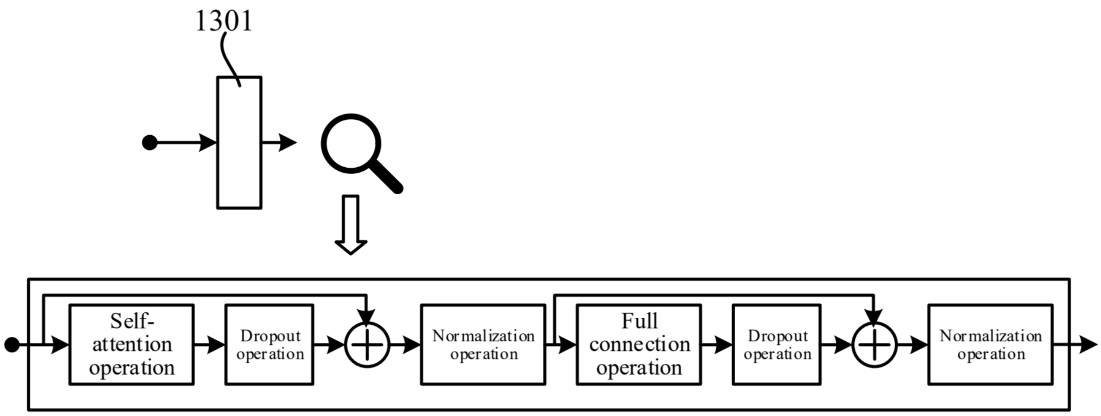


FIG. 13

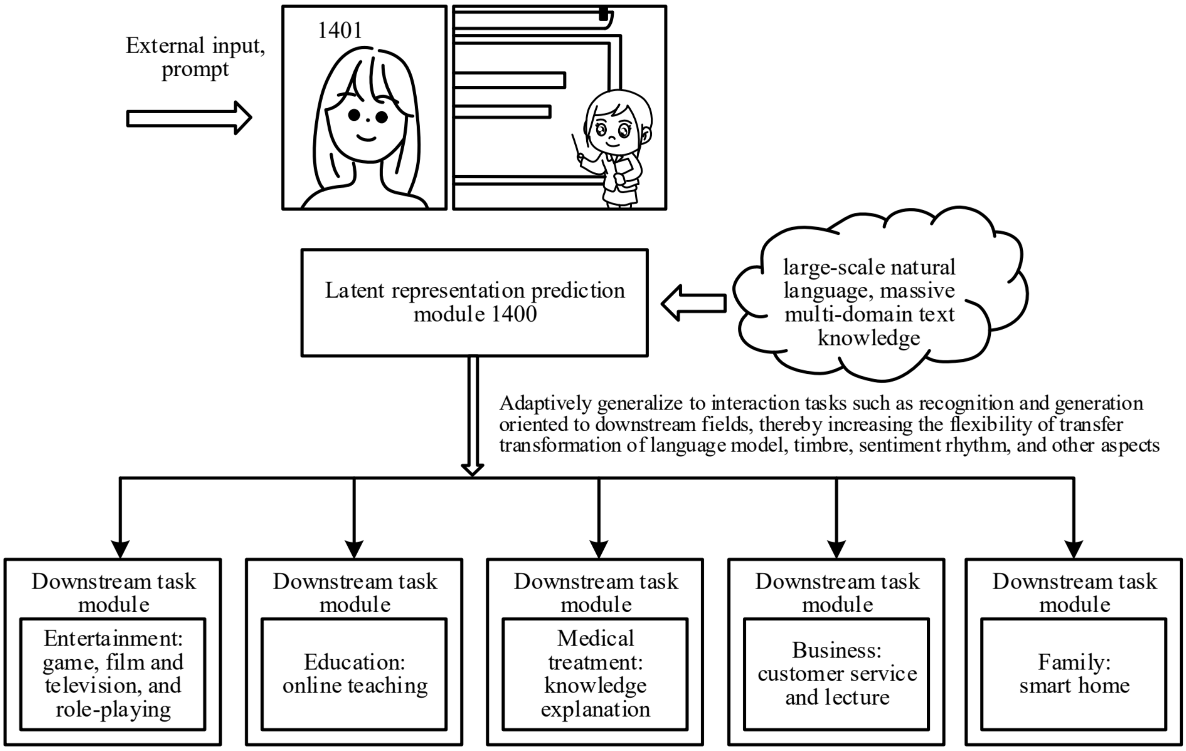


FIG. 14

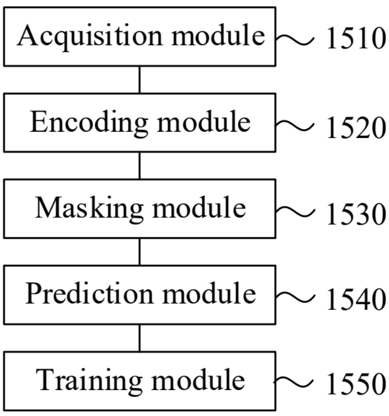


FIG. 15

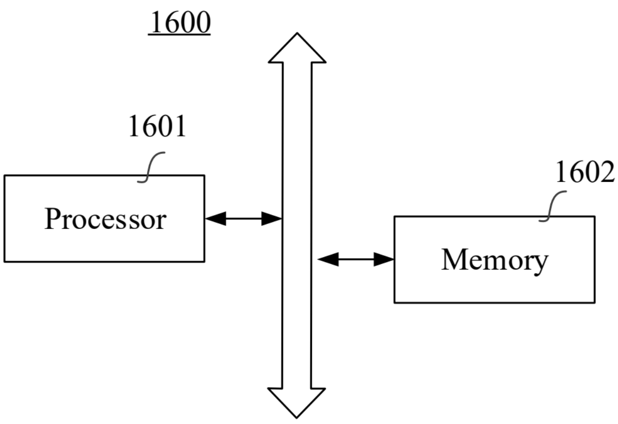


FIG. 16

## INTERNATIONAL SEARCH REPORT

International application No.
**PCT/CN2024/108690**

**A. CLASSIFICATION OF SUBJECT MATTER**

G10L19/16(2013.01)i; G10L25/06(2013.01)i

According to International Patent Classification (IPC) or to both national classification and IPC

**B. FIELDS SEARCHED**

Minimum documentation searched (classification system followed by classification symbols)

IPC: G10L19 G10L25

Documentation searched other than minimum documentation to the extent that such documents are included in the fields searched

Electronic data base consulted during the international search (name of data base and, where practicable, search terms used)

CNTXT, CNABS, CNKI: 音频, 语音, 文本, 语义, 编码, 掩码, 特征, 位置, 定位, 标记, 预测, 权重, 训练, 差异, 差别, 模型, 模态; VEN, USTXT, WOTXT, ELSEVIER: voice, sound, text, semanteme, coding, mask, forecast, sign, character, position, place, station, weight, training, different, model

**C. DOCUMENTS CONSIDERED TO BE RELEVANT**

| Category* | Citation of document, with indication, where appropriate, of the relevant passages | Relevant to claim No. |
|---|---|---|
| PX | CN 117219101 A (TENCENT TECHNOLOGY (SHENZHEN) CO., LTD.) 12 December 2023 (2023-12-12) claims 1-15 | 1-15 |
| A | CN 114898734 A (BEIJING BAIDU NETCOM SCIENCE AND TECHNOLOGY CO., LTD.) 12 August 2022 (2022-08-12) description, paragraphs 37-129, and figures 1-4 | 1-15 |
| A | CN 111899759 A (BEIJING DIDI INFINITY TECHNOLOGY AND DEVELOPMENT CO., LTD.) 06 November 2020 (2020-11-06) entire document | 1-15 |
| A | CN 116343781 A (JINGDONG TECHNOLOGY INFORMATION TECHNOLOGY CO., LTD.) 27 June 2023 (2023-06-27) entire document | 1-15 |
| A | US 2020135220 A1 (ELECTRONICS AND TELECOMMUNICATIONS RESEARCH INSTITUTE et al.) 30 April 2020 (2020-04-30) entire document | 1-15 |

☐ Further documents are listed in the continuation of Box C. ☑ See patent family annex.

* Special categories of cited documents:

"A" document defining the general state of the art which is not considered to be of particular relevance

"D" document cited by the applicant in the international application

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **10 October 2024** | **13 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/108690**

| Patent document cited in search report | | | Publication date (day/month/year) | Patent family member(s) | | | Publication date (day/month/year) |
|---|---|---|---|---|---|---|---|
| CN | 117219101 | A | 12 December 2023 | None | | | |
| CN | 114898734 | A | 12 August 2022 | CN | 114898734 | B | 16 July 2024 |
| CN | 111899759 | A | 06 November 2020 | CN | 111899759 | B | 03 September 2021 |
| CN | 116343781 | A | 27 June 2023 | None | | | |
| US | 2020135220 | A1 | 30 April 2020 | US | 11276413 | B2 | 15 March 2022 |
| | | | | KR | 20200047268 | A | 07 May 2020 |

Form PCT/ISA/210 (patent family annex) (July 2022)